# EUROPEAN PATENT SPECIFICATION

(11) **EP 1 934 698 B1**
(45) Date of publication and mention of the grant of the patent: **31.10.2018**
(21) Application number: 06797492.3
(22) Date of filing: 30.08.2006
(51) Int. Cl.: G06F 3/12, B41J 29/38, H04W 8/00, H04W 84/18, H04W 76/14

(54) **IMAGE FORMING APPARATUS, MOBILE DEVICE, AND CONTROL METHOD THEREFOR**
BILDERZEUGUNGSVORRICHTUNG, MOBILES GERÄT UND STEUERVERFAHREN DAFÜR
DISPOSITIF DE FORMATION D'IMAGE, DISPOSITIF MOBILE ET SON PROCEDE DE COMMANDE

(30) Priority: 31.08.2005 GB 0517705; 09.09.2005 JP 2005262979
(43) Date of publication of application: 25.06.2008
(73) Proprietor: CANON KABUSHIKI KAISHA, Ohta-ku Tokyo 146-8501 (JP)
(72) Inventor: KIMURA, Yoshio, Tokyo 146-8501 (JP); NEMOTO, Junko, Tokyo 146-8501 (JP); CHIU, Wilson, Sawbridgeworth, Herts CM21 0HR (GB); DABORN, Andrew, Reading Berkshire, RG30 2BY (GB); SHAO, Yuan, Uxbridge UB11 1JA (GB)
(74) Representative: Hitching, Peter Matthew
(86) International application number: PCT/JP2006/317595
(87) International publication number: WO 2007/026938

(56) References cited:
- EP-A1- 0 853 273
- EP-A2- 1 331 549
- EP-A2- 1 445 940
- JP-A- 2005 117 528
- US-A1- 2003 050 963
- US-A1- 2003 096 581
- US-A1- 2003 174 357

## Description

### TECHNICAL FIELD

The present invention relates to an image forming apparatus capable of communicating with a mobile device, and a mobile device.

### BACKGROUND ART

Mobile devices such as a mobile phone and PDA become popular. Recent mobile phones have many functions, similar to PDAs, and can input, store, and hold information. In this situation, a demand arises for printing information held in the mobile device.

To meet this demand, there is known a technique of transmitting information stored and held in a mobile device to an image forming apparatus such as a printing apparatus or multifunctional peripheral via a wireless communication means, and printing the information (e.g., Japanese Patent Laid-Open No. 2003-248566).

There is also known a technique of, when directing a mobile device to a printer, displaying a screen associated with printing on the display of the mobile device, and when directing the mobile device to a FAX apparatus, displaying a screen for selecting a transmission destination on the display of the mobile device (e.g., Japanese Patent Laid-Open No. 10-240550).

In the prior arts, however, information to be processed flows in only one direction from a mobile device to an output apparatus such as a printing apparatus, and no flow in the opposite direction is considered. Contents displayed on the mobile device are uniquely determined by an output apparatus serving as a communication partner.

EP1331549 discloses a method for printing content in which an imaging device receives a print-by-reference request from a mobile device. The mobile device also generates an archive file that may be requested by the imaging device. The archive file may include the content to be printed or may be used to generate the content to be printed.

US 2003/0050963 describes a token based printing system. A user of a mobile device operates the device to display a screen in which a document may be selected. When the user selects to display services relating to the document, the mobile device sends a service discovery request. An output device may respond to the request by responding with device information including the nature of particular services that are available.

### DISCLOSURE OF INVENTION

It is an object of the present invention to further improve the operability of a mobile device by changing the operation screen of the mobile device in accordance with the operation status of the mobile device or that of an image forming apparatus in a communicable state when the mobile device and image forming apparatus communicate with each other.

According to a first aspect of the present invention there is provided a system according to claim 1.

According to a second aspect of the present invention there is provided a method of controlling a system according to claim 6.

Further features of the present invention will become apparent from the following description of exemplary embodiments with reference to the attached drawings.

### BRIEF DESCRIPTION OF DRAWINGS

The accompanying drawings, which are incorporated in and constitute a part of the specification, illustrate embodiments of the invention and, together with the description, serve to explain the principles of the invention.
Figure 1 is a schematic view of a mobile phone and a multifunctional peripheral (MFP) of a document data transfer system in accordance with an embodiment of the present invitation.
Figure 2 is a detailed view of the mobile phone shown in Figure 1.
Figure 3 and 4 show explanatory views illustrating the display of the mobile phone shown in Figure 1 during operation of the document data transfer system.
Figure 5 to 7 show explanatory views illustrating the display of the mobile phone when saving document data to the mobile phone.
Figure 8 shows a flowchart of the process of saving document data from the MFP to the mobile phone.
Figure 9 is a schematic view of a mobile phone and projection system of a document data transfer system in accordance with a second embodiment of the present invitation.
Figure 10 shows a flowchart of the process of printing a document form the mobile phone to MFP.
Figure 11 is a schematic view of a file bundle transferred by the document data transfer system.
Figure 12A to 15 show explanatory views illustrating the display of the mobile phone when previewing a document.
Figure 16 to 20 show explanatory views illustrating the display of the mobile phone of a document data transfer system when printing from the mobile phone.
Figure 21 is a block diagram of a multifunctional peripheral in the first embodiment.
Figure 22 is a block diagram of a mobile device in the first embodiment.
Figure 23 is a view showing an example of the configuration of an image forming system formed from the multifunctional peripheral and mobile device in the first embodiment.
Figure 24 is a flowchart showing the process procedures of the multifunctional peripheral in the first embodiment.
Figure 25 is a flowchart showing process procedures subsequent to step S415 in Figure 24.
Figure 26 is a flowchart showing process procedures subsequent to step S417 in Figure 24.
Figure 27 is a flowchart showing process procedures subsequent to step S418 in Figure 24.
Figure 28 is a view showing a PIN input screen displayed on the display unit of the multifunctional peripheral upon detecting the mobile device.
Figure 29 is a view showing an example of a file selection screen displayed on the display unit of the multifunctional peripheral.
Figure 30 is a view showing an example of a file selection screen displayed on the display unit of the mobile device.
Figure 31 is a view showing a screen displayed on the mobile device in saving a file.
Figure 32 is a view showing a screen displayed on the mobile device in printing.
Figure 33 is a view showing a screen displayed on the mobile device in both file saving and printing.
Figure 34 is a view showing a screen displayed on the display unit of the mobile device when no file is selected in the multifunctional peripheral and mobile device.
Figure 35 is a view showing a screen displayed on the display unit of the mobile device during a file save process.
Figure 36 is a view showing a screen displayed on the display unit of the mobile device at the end of the file save process.
Figure 37 is a view showing a screen displayed on the display unit of the mobile device while print setting is performed.
Figure 38 is a view showing a screen displayed on the display unit of the mobile device during printing.
Figure 39 is a view showing a screen displayed on the display unit of the mobile device at the end of printing.
Figure 40 is a view showing a screen displayed on the display unit when a document is read in a multifunctional peripheral in the second embodiment.
Figure 41 is a flowchart showing the process procedures of the mobile device in the first embodiment.
Figure 42 is a flowchart showing the process procedures of the mobile device in a first example.

### BEST MODE FOR CARRYING OUT THE INVENTION

Preferred embodiments of the present invention will be described in detail below with reference to the accompanying drawings.

### <First Embodiment>

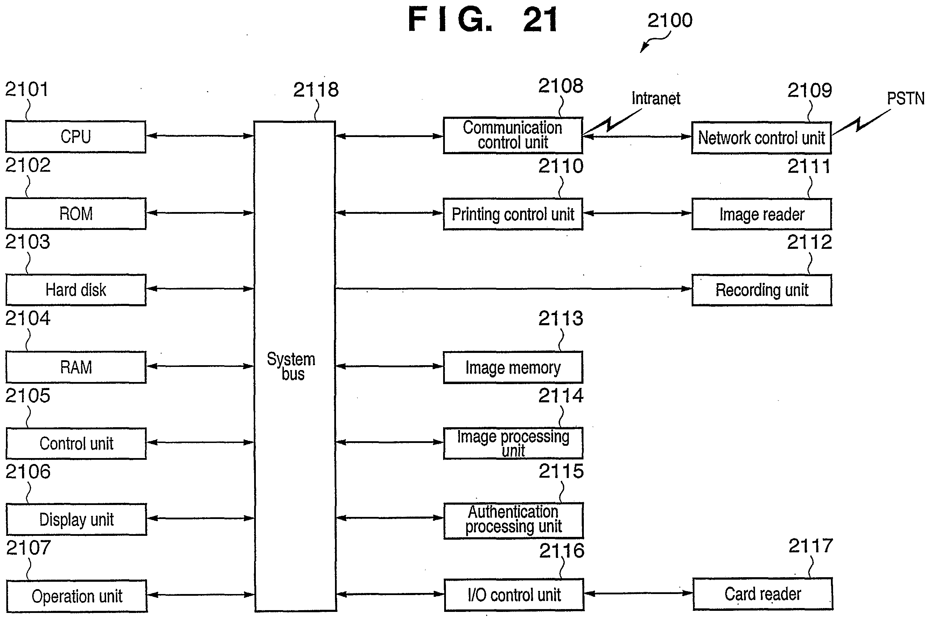

Figure 21 is a block diagram showing the schematic arrangement of a multifunctional peripheral 2100 serving as an image forming apparatus in the first embodiment.

A CPU (Central Processing Unit) 2101 drives and controls building elements connected to a system bus 2118 in accordance with a control program stored in a ROM (Read Only Memory) 2102 or hard disk 2103. The CPU 2101 stores data necessary for control in a RAM (Random Access Memory) 2104. When a program stored in the hard disk 2103 is to be executed, it is loaded in the RAM 2104 and then executed.

A display unit 2106 is formed from a liquid crystal display, and displays various types of information such as driving conditions, a device status, and inputted information.

An operation unit 2107 is made up of keys such as a ten-key pad and start key for making settings by the user and inputting an instruction and the like. Part of the operation unit 2107 is formed from a touch panel for designating soft keys displayed on the display screen of the display unit 2106.

A communication control unit 2108 connects to an intranet or the Internet via a wireless or wired network to transmit/receive control commands, and document data including image data. The communication control unit 2108 can wirelessly communicate with a mobile device (to be described later). Communication may be done by direct wireless communication or via access points set on a wired network. The communication method includes Wi-Fi (Wireless Fidelity) or Bluetooth.

A network control unit 2109 connects to PSTN (Public Switched Telephone Network), and executes predetermined line control in origination/termination to connect or disconnect the line. Image data and control signals are modulated/demodulated by an internal modem, and facsimile-transmitted/received via the network control unit 2109.

An image reader 2111 reads image data by photoelectrically converting reflected light corresponding to an image of light which irradiates a document to be transmitted, copied, or saved. Then, the image reader 2111 transmits, copies, or saves the image data via a printing control unit 2110.

A recording unit 2112 receives image data or print data via the printing control unit from an information generating source such as an image reader or client computer. The recording unit 2112 forms the data as a permanent visual image on a recording sheet, and discharges the recording sheet. The recording method is electrophotography by a laser beam printer or the like. However, the recording method is arbitrary such as a method of discharging ink droplets.

An image memory 2113 temporarily stores read/received image data or print data. Depending on the device or status, the image memory 2113 may be arranged in the hard disk 2103 or RAM 2104.

An image processing unit 2114 compresses/encodes image data to be transmitted, or decompresses/decodes received image data. The image processing unit 2114 performs format conversion from image data to be saved into a format (e.g., PDF format) designated by a user, and an image correction process corresponding to the optical response characteristic of the image reader 2111, variations of the sender, or the like. In response to a request, the image processing unit 2114 performs an image manipulation process such as a scaling process for an image inputted by a user via the operation unit 2107, and an image optimization process to optimize an image into image data for the write characteristic of the recording unit 2112.

An authentication processing unit 2115 authenticates a user and work group, and also authenticates a print job.

A card reader 2117 transmits (writes) and receives (reads) commands and data with a non-contact type IC card using a short distance wireless communication technique such as NFC (Near Field Communication; ISO/IEC IS 18092). The card reader 2117 transmits or announces data such as user information via an I/O control unit 2116. In order to perform short distance communication with a compatible card (not shown), the card reader 2117 comprises a portion (antenna) over which the card is held.

A system bus 2118 connects the CPU 2101, the ROM 2102, the hard disk 2103, the RAM 2104, a control unit 2105, the display unit 2106, and the operation unit 2107. Further, the system bus 2118 connects the communication control unit 2108, the printing control unit 2110, the image memory 2113, the image processing unit 2114, the authentication processing unit 2115, and the I/O control unit 2116.

The multifunctional peripheral has a transfer function of facsimile-transmitting read image data or transferring data to a document management server computer, and a copying function of recording and outputting read image data. Further, the multifunctional peripheral has a reception/printing function of facsimile-receiving image data, and a printing function of receiving and printing print data from a client computer. That is, the multifunctional peripheral can be utilized not only as a copying machine, but also as a facsimile apparatus, printer apparatus, and scanner apparatus.

The multifunctional peripheral 2100 in the first embodiment has a function of saving a document image read by the image reader 2111 as a file of a predetermined format (PDF file in the first embodiment) in the hard disk 2103. The multifunctional peripheral 2100 also has a function of similarly saving a file which is requested from the network to be saved. If necessary, a file can be processed, e.g., printed out.

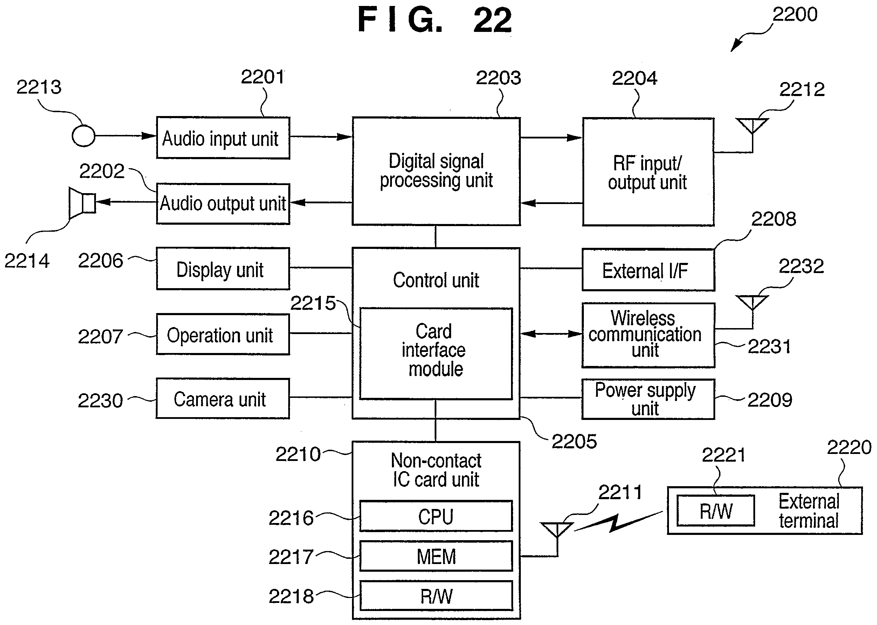

Figure 22 is a block diagram of a mobile device 2200 such as a mobile phone in the first embodiment. Figure 22 is a block diagram showing the schematic arrangement of a mobile device, e.g., mobile phone which is or can be equipped with a non-contact card function. The first embodiment will exemplify the following arrangement. However, the present invention can be applied to a device capable of information communication, and is not particularly limited to the functions in Figure 22.

The mobile device 2200 is configured by arranging a control unit 2205 as a center and connecting a digital signal processing unit 2203, display unit 2206, operation unit 2207, external I/F 2208, and non-contact IC card unit 2210.

The control unit 2205 is a main part for implementing the functions of the mobile phone, and is made up of a CPU, EEPROM, Flash, SRAM, and the like (none are shown). In the first embodiment, the control unit 2205 includes a card interface module 2215 for exchanging commands and data with the non-contact IC card unit 2210.

The digital signal processing unit 2203 is connected to an audio input unit 2201 connected to a microphone 2213, an audio output unit 2202 connected to a speaker 2214, and an RF input/output unit 2204 connected to an antenna 2212. The digital signal processing unit 2203 encodes a digital audio signal, and decodes data into a digital audio signal.

The audio input unit 2201 converts an analog audio signal from the microphone 2213 into a digital signal. The audio output unit 2202 outputs a received digital audio signal from the speaker. The RF input/output unit 2204 transmits/receives RF signals.

The display unit 2206 displays information to a user, and is made up of an LCD driver, LCD display device, and the like. The operation unit 2207 allows a user to input operation information to the mobile device 2200. Reference numeral 2230 denotes a camera unit. Image data sensed by the camera unit 2230 is stored in the Flash memory of the control unit 2205. A wireless communication unit 2231 comprises an antenna 2232 for communicating with a wireless LAN.

The external I/F 2208 provides an interface with an external device, and comprises a communication interface circuit, 16-pin connector, and the like. A power supply unit 2209 generates and supplies power necessary for each block on the basis of the battery power supply.

The non-contact IC card unit 2210 is connected to the card interface module 2215 of the control unit 2205. The non-contact IC card unit 2210 incorporates a dedicated CPU 2216, a Flash ROM (MEM) 2217 serving as a nonvolatile memory for holding data, programs, and the like, a reader/writer (R/W) module 2218, and other interfaces (not shown). The non-contact IC card unit 2210 exchanges data and the like with an IC card-compatible external terminal 2220 via an antenna 2211 for the short distance wireless communication technique (communication distance is about several ten cm) such as NFC. A known example of using the short distance wireless communication technique is an IC card pass (Suica®) adopted by a major railway company.

The card interface module 2215 is assembled as part of the control unit 2205, and is a software module serving as both a user interface between a user and the non-contact IC card unit 2210, and a non-contact IC card interface. The power supply unit 2209 generates and supplies power necessary for each block on the basis of the battery power supply.

The memory in the control unit 2205 of the mobile device 2200 having the above arrangement stores image data sensed by the camera unit 2230, as described above, and memo data inputted from the operation unit 2207 of the mobile device, a transmitted/received text of email, or the like.

The arrangements of the multifunctional peripheral 2100 and mobile device 2200 in the first embodiment have been described above. It should be noted that both the multifunctional peripheral 2100 and mobile device 2200 have the short distance wireless communication function such as NFC, and the LAN communication function.

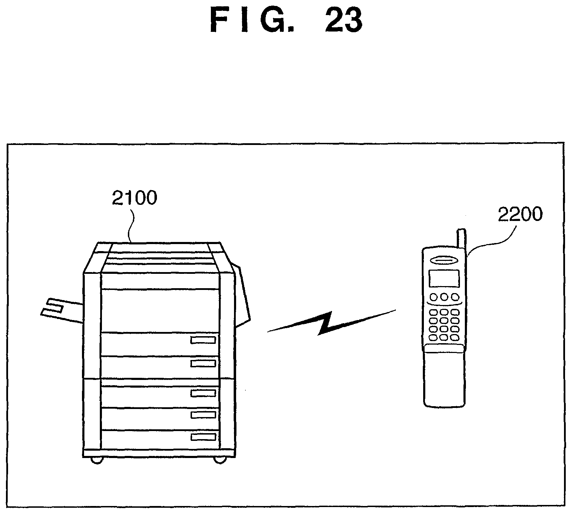

Figure 23 is a view for explaining the configuration of an image forming system formed from the multifunctional peripheral 2100 and mobile device 2200 in the first embodiment.

In Figure 23, there are two types of communication between the multifunctional peripheral 2100 and the mobile device 2200: short distance wireless communication (communication distance is several ten cm), and wireless LAN communication longer in communication distance than short distance wireless communication. The reason why the two types of communication are employed will be described below. In the latter communication, the mobile device 2200 has the wireless LAN communication function, but the multifunctional peripheral 2100 need not always have it as far as the multifunctional peripheral 2100 has a wired LAN and an access point is set on the wired LAN.

The multifunctional peripheral 2100 in the first embodiment functions as a print server which receives print data to be copied or FAX-transmitted via the operation unit 2107 or print data from a client PC on a network or the like, and prints the data.
However, these functions are not directly related to the present invention. Thus, only communication between the multifunctional peripheral 2100 and the mobile device 2200 will be focused and described.

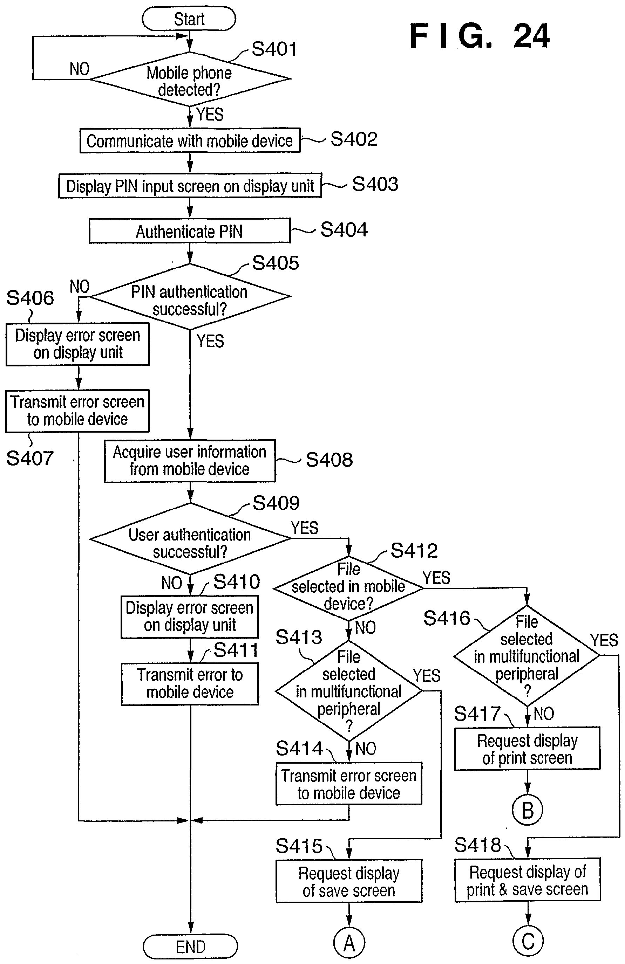

Figure 24 shows a process executed by (the CPU 2101 of) the multifunctional peripheral 2100 in the first embodiment.

In step S401, the process waits until (the non-contact IC card unit 2210 of) the mobile device 2200 is detected by the card reader 2117. If the mobile device 2200 is detected by the card reader 2117, the flow advances to step S402.

After the flow advances to step S402, the CPU 2101 communicates with the non-contact IC card unit 2210 of the mobile device via the I/O control unit 2116. At this time, the CPU 2101 acquires the address (IP address when the TCP/UDP/IP protocol is used) of the wireless LAN of the mobile device 2200 that is stored in the non-contact IC card unit 2210, and notifies the mobile device 2200 of the address of the communication control unit 2108 of the multifunctional peripheral 2100. Note that step S402 is repetitively executed for only a predetermined time.

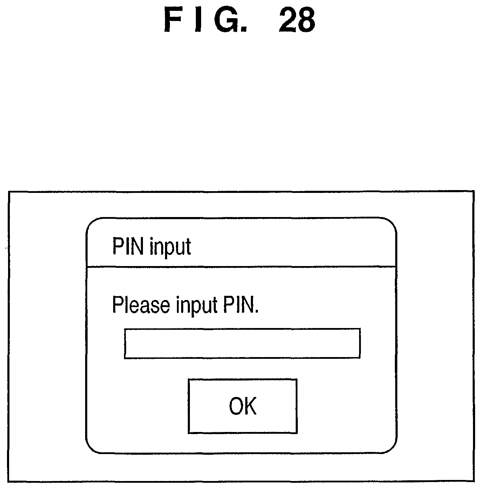

In step S403, the CPU 2101 displays a PIN input screen (Figure 28) for PIN (Personal Identification Number) authentication on the display unit 2106 of the multifunctional peripheral 2100, and prompts a user to input a PIN. If the user touches an OK button after inputting a PIN, the CPU 2101 receives the inputted PIN information, and causes the authentication processing unit 2115 to perform an authentication process. The authentication processing unit 2115 performs the authentication process by determining whether a PIN matching the inputted PIN information is held in a table (not shown) which is stored in advance in the hard disk 2103 of the multifunctional peripheral 2100 and stores available user PINs (step S404).

In step S405, the CPU 2101 determines whether authentication is successful. If authentication is successful, the flow advances to step S408; if authentication fails, to step S406.

If the flow advances to step S406, the CPU 2101 causes the display unit 2106 to display an error screen indicating that authentication fails.

The CPU 2101 transmits, to the mobile device via the I/O control unit 2116, an error message indicating that authentication fails, and causes the mobile device to display the message. Then, the process ends.

If PIN authentication is successful, communication switches from communication between the card reader 2117 and the non-contact IC card to one between the communication control unit 2108 and the wireless communication unit 2231. That is, communication switches to one using the network addresses of the partners. At this time, since PIN authentication is successful, the display unit 2106 of the multifunctional peripheral 2100 displays a message "You need not search for the mobile device 2200." to the user, and permits a user-friendly operation to the user.

Communication in the following process is established between the communication control unit 2108 of the multifunctional peripheral 2100 and the wireless communication unit 2231 of the mobile device 2200.

After the flow advances to step S408, the CPU 2101 acquires user information (user ID or username) from the mobile device 2200, and causes the authentication processing unit 2115 to authenticate the user. This authentication is also executed by looking up the user information table stored in advance in the hard disk.

In step S409, the CPU 2101 determines whether authentication by the authentication processing unit 2115 is successful. If authentication is successful, the flow advances to step S412; if authentication fails, to step S410.

In step S410, the CPU 2101 causes the display unit 2106 to display an error screen indicating that authentication fails. In step S411, the CPU 2101 notifies the mobile device 2200 of generation of the error, and causes it to display a screen indicating generation of the error.

If the CPU 2101 determines in step S409 that authentication is successful, it transmits a request message to inquire of the mobile device 2200 whether a file is selected, and determines the contents of a response to the request.

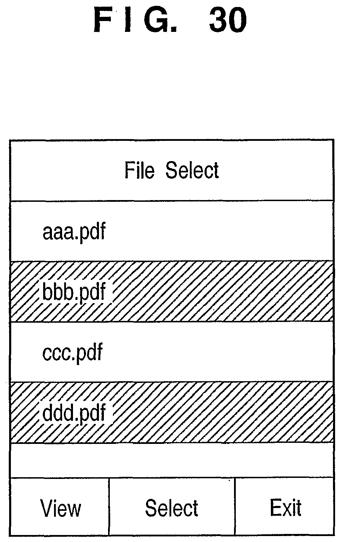

For example, when screen information shown in Figure 30 is displayed (file bbb.pdf and file ddd.pdf are selected) on the mobile device 2200, the CPU 2101 receives information to this effect, and the flow advances to step S416. If no file is selected in the mobile device 2200, the flow advances to step S413. The mobile device 2200 displays the display screen shown in Figure 30, and the user can select data to be printed by the multifunctional peripheral 2100 from data held by the mobile device.

When the flow advances to step S413, the multifunctional peripheral 2100 determines whether at least one of files saved to the hard disk 2103 is selected by the user.

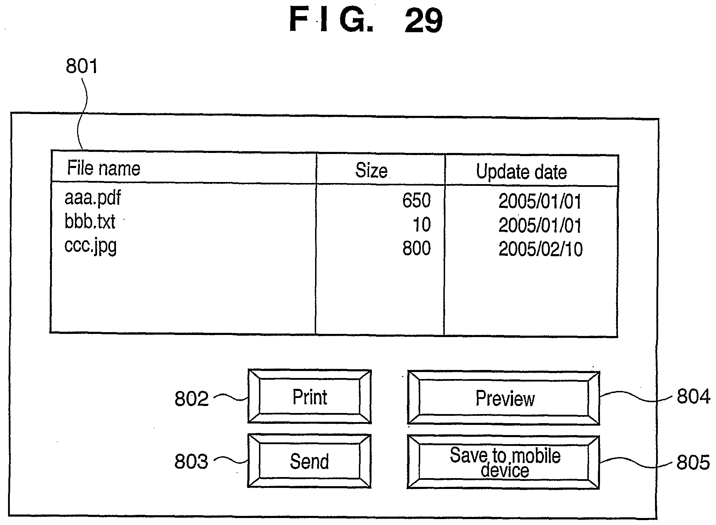

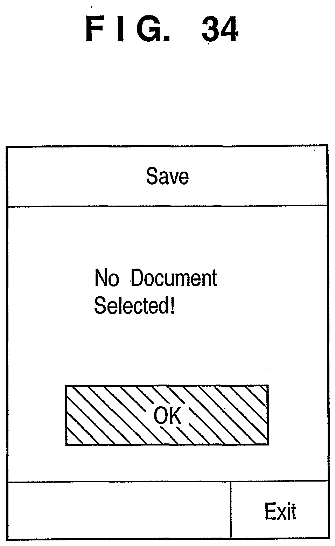

Figure 29 shows a display example on the display unit 2106 of the multifunctional peripheral 2100. In Figure 29, a file list is displayed, but no file is selected (upon selection, a selected file name is highlighted). In this case, the flow advances to step S414, and the CPU 2101 transmits an error message to the mobile device 2200 and causes it to display the error message because there is no process to be executed. Figure 34 shows the error message displayed on the mobile device 2200. That is, the multifunctional peripheral 2100 causes the mobile device 2200 to display the screen shown in Figure 29. The user can select data to be transmitted to the mobile device 2200 from data held by the multifunctional peripheral.

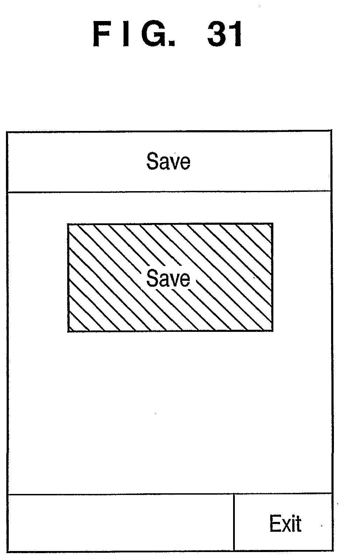

If the CPU 2101 determines in step S413 that at least one file is selected in the multifunctional peripheral 2100, the flow advances to step S415. The flow advances to step S415 when no file is selected in the mobile device 2200 and a file is selected in the multifunctional peripheral 2100.
Hence, transfer of a file from the multifunctional peripheral 2100 to the mobile device 2200 means saving of the file held in the multifunctional peripheral 2100 to the mobile device 2200. The CPU 2101 transmits a save request to the mobile device 2200 and causes it to display a save button on the display screen of the mobile device 2200. As a result, the mobile device 2200 displays a screen ("Save" button) shown in Figure 31.

If the CPU 2101 determines in step S412 that at least one file is selected in the mobile device 2200, the flow advances to step S416. In step S416, the CPU 2101 determines whether a file is selected in the multifunctional peripheral 2100.

If no file is selected in the multifunctional peripheral 2100, the flow advances to step S417; if a file is selected, to step S418.

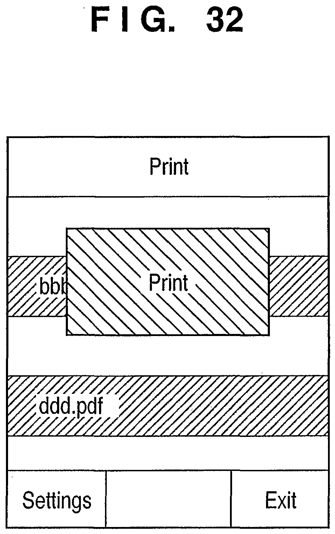

The condition that the flow advances to step S417 is that a file is selected in the mobile device 2200 and no file is selected in the multifunctional peripheral 2100. Thus, the CPU 2101 transmits print request information to the mobile device 2200, and causes it to display a screen ("Print" button) shown in Figure 32.

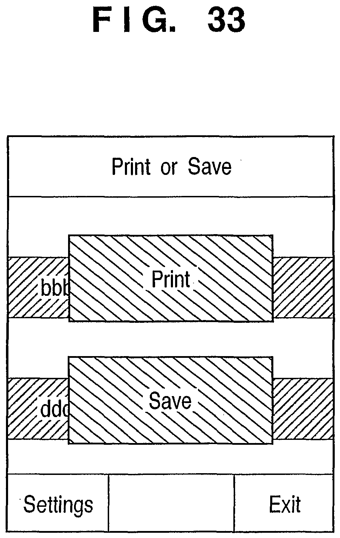

The condition that the flow advances to step S418 is that files are selected in both the multifunctional peripheral 2100 and mobile device 2200. That is, files are transferred in two ways. The CPU 2101 transmits request information for saving and printing to the mobile device 2200, and causes the display unit 2206 of the mobile device 2200 to display a screen shown in Figure 33.

The above process is summarized as follows. To print a file saved in the mobile device 2200, the file is selected. To save, to the mobile device 2200, a file saved in the multifunctional peripheral 2100, the operation unit 2107 of the multifunctional peripheral 2100 is operated to select the file. One or both of the multifunctional peripheral 2100 and mobile device 2200 are operated, the mobile device 2200 is held over a predetermined position of the multifunctional peripheral 2100, and then a PIN and user information are authenticated. In response to this, the mobile device 2200 displays an operation screen for performing file transfer from the multifunctional peripheral 2100 to the mobile device 2200, from the mobile device 2200 to the multifunctional peripheral 2100, or between the multifunctional peripheral 2100 and the mobile device 2200. In at least the mobile device 2200, an operation screen corresponding to a file selection status is displayed on the mobile device.

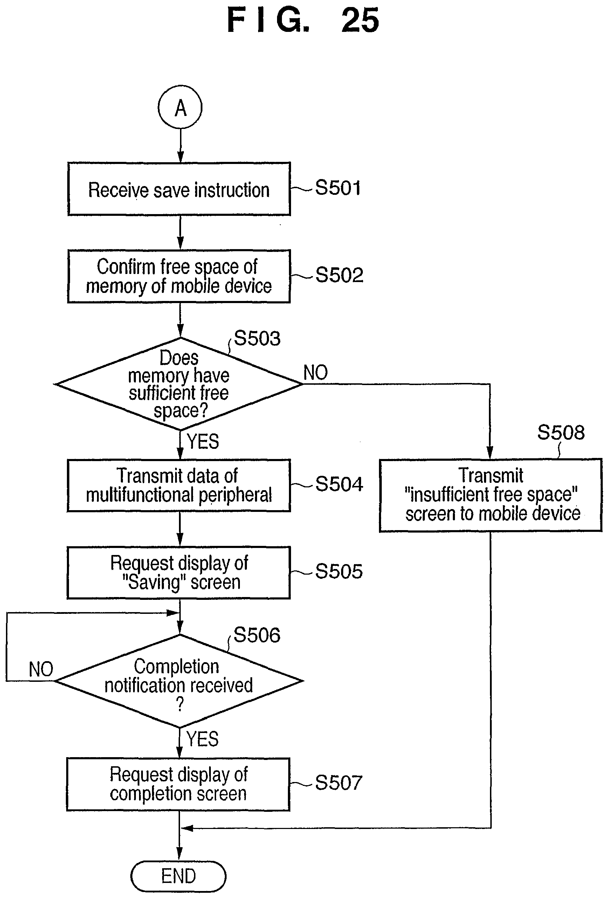

A process subsequent to step S415 in Figure 24 will be explained with reference to the flowchart of Figure 25. This process is executed when a file selected in the multifunctional peripheral 2100 is to be saved to the mobile device 2200 and the screen in Figure 31 is displayed on the mobile device 2200.

In step S501, the CPU 2101 receives a save instruction by the user from the mobile device 2200. For example, the save instruction is information indicating that the "Save" button in the screen of Figure 31 is selected in the mobile device 2200.

If the CPU 2101 detects the save instruction, the flow advances to step S502, and the CPU 2101 transmits request information for the free space of the memory to the mobile device 2200, in order to confirm the free space of the memory in the mobile device 2200. In response to this, the mobile device 2200 notifies the CPU 2101 of free memory space information. The flow advances to step S503, and the CPU 2101 compares the free space of the memory with the total data amount of a file selected in the multifunctional peripheral 2100, and determines whether the mobile device 2200 has a free memory space enough to save the file.

If the CPU 2101 determines that the mobile device 2200 has a free memory space enough to save the file selected in the multifunctional peripheral 2100, the flow advances to step S504; if it determines that the mobile device 2200 does not have a sufficient free memory space, to step S508.

When the flow advances to step S508, the CPU 2101 transmits information indicating that the free space of the memory in the mobile device 2200 is small and dose not allow to save the file. As a result, the mobile device 2200 displays a message indicating that no file can be saved, and the process ends.

When the flow advances to step S504, the CPU 2101 of the multifunctional peripheral 2100 starts transmitting, to the mobile device 2200 via the communication control unit 2108, the file selected by the user from the multifunctional peripheral 2100.

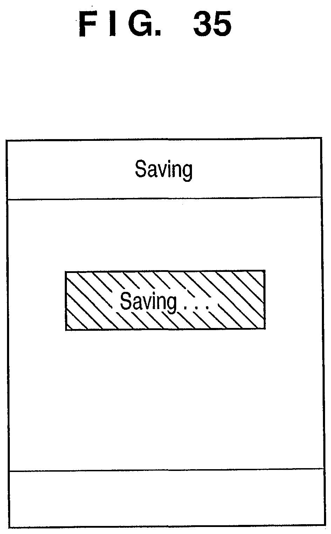

During file transfer, the CPU 2101 transmits, to the mobile device 2200 via the communication control unit 2108, a message indicating that the file is being saved (step S505). Consequently, the mobile device 2200 displays a screen shown in Figure 35.

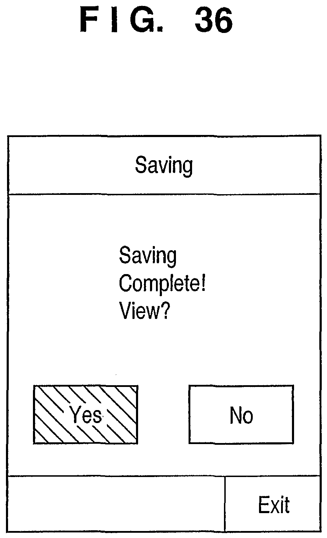

In step S506, the CPU 2101 determines whether it has received a save completion notification from the mobile device 2200. If the CPU 2101 receives the save completion notification, it transmits, via the communication control unit 2108, a request to display completion of saving, and causes the mobile device 2200 to display a "saving completion screen". Figure 36 shows a screen displayed at this time.

When a user operates the mobile device 2200 to designate the "Yes" button in the screen of Figure 36, a preview of saved data can be displayed on the mobile device. When the user presses the "No" button, the screen of the mobile device returns to one in Figure 30.

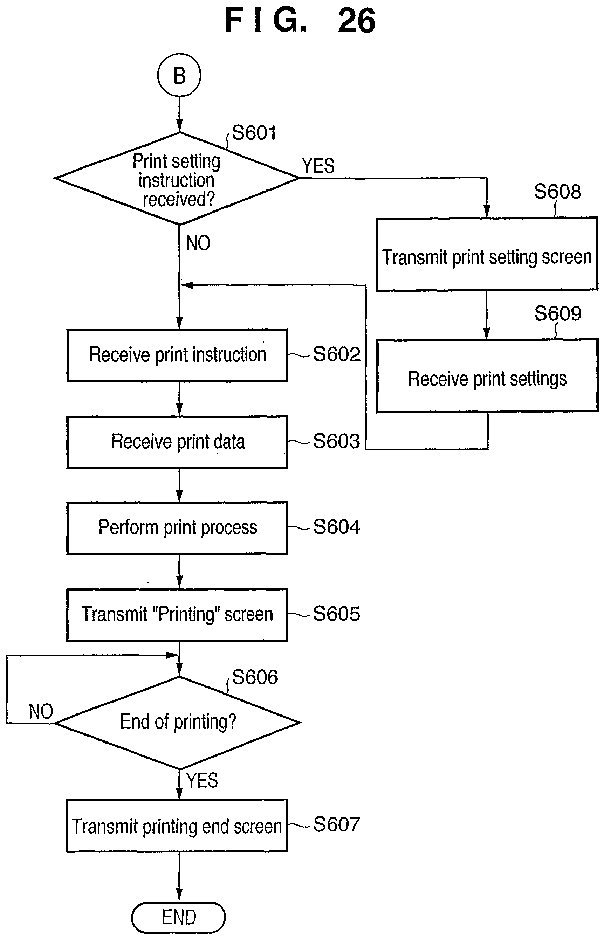

A process when the communication control unit 2108 transmits print screen display request information to the mobile device 2200 in step S417 of Figure 24 will be described with reference to the flowchart of Figure 26.

In step S601, the CPU 2101 determines whether a print setting instruction has been received from the mobile device 2200. More specifically, the CPU 2101 determines whether the "Settings" button in the screen shown in Figure 32 has been designated in the mobile device 2200.

If the CPU 2101 receives information indicating that "Settings" button has been designated, the flow advances to step S608; if it does not receive the information, to step S602.

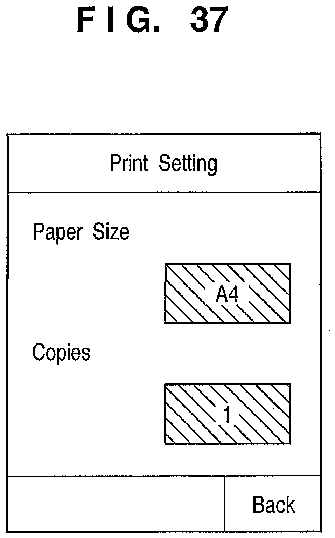

When the flow advances to step S608, the CPU 2101 transmits, to the mobile device 2200 via the communication control unit 2108, a request to display a print setting screen. Then, the mobile device 2200 displays a screen shown in Figure 37. A user who operates the mobile device can change a default paper size (e.g., A4) by operating the "Paper Size" button in Figure 37 or the like, and change a default print count (one copy) by operating the "Copies" button. In step S609, the CPU 2101 receives the setting contents from the mobile device 2200, and the flow advances to step S602.

In step S602, the CPU 2101 receives a print instruction from the mobile device 2200. More specifically, the CPU 2101 receives a print instruction in response to selection of the "Print" button in Figure 32 in the mobile device. When the "Print" button is designated without designating the "Settings" button, a default paper size and a copy count of 1 are finalized.

In step S603, the CPU 2101 receives a selected file to be printed from the mobile device via the communication control unit 2108. In step S604, the CPU 2101 generates image data corresponding to the received file, controls the printing control unit 2110, and prints by the recording unit 2112.

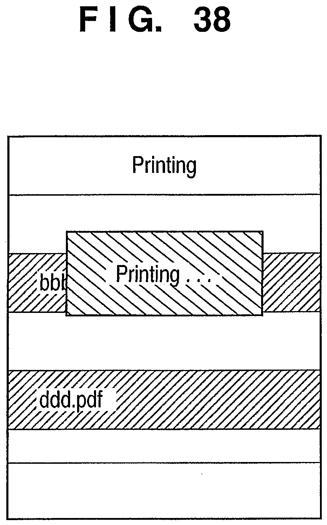

During printing, the CPU 2101 transmits information indicating "during printing" to the mobile device 2200 via the communication control unit 2108 in step S605. Then, the mobile device displays a screen shown in Figure 38.

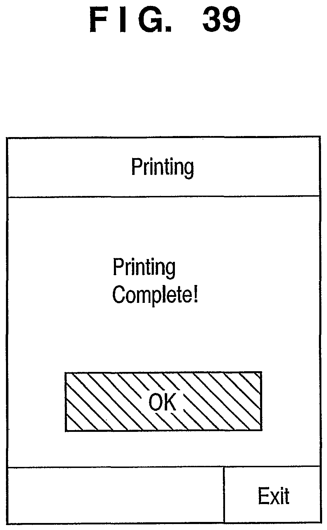

In step S606, the CPU 2101 determines that the print process ends. If the CPU 2101 determines that the print process ends, the flow advances to step S607 to transmit information indicating the end of printing to the mobile device 2200, and the process ends. When the mobile device 2200 receives the information indicating the end of printing, a screen shown in Figure 39 is displayed on the display unit 2206 for only a predetermined time.

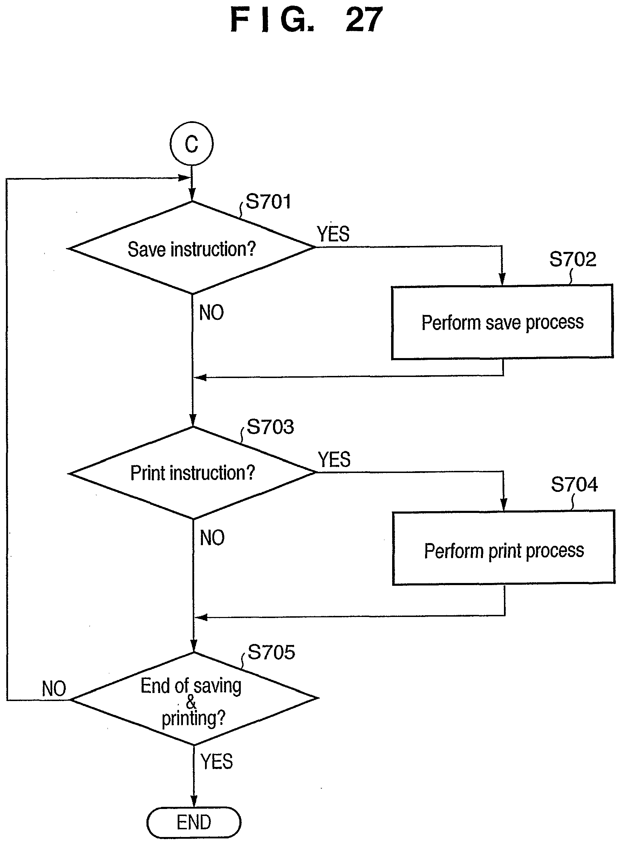

A process subsequent to the process in step S418 of Figure 24 will be explained with reference to the flowchart of Figure 27. This process is executed when files are selected in both the multifunctional peripheral 2100 and mobile device 2200 and the screen in Figure 33 is displayed on the display unit 2206 of the mobile device 2200. A user designates the "Print" button, "Save" button", or "Settings" button in the screen of Figure 33.

In step S701, the CPU 2101 determines whether it has received a save instruction from the mobile device 2200. More specifically, the CPU 2101 determines whether the "Save" button in the screen of Figure 33 has been selected in the mobile device. If the CPU 2101 determines that it has received the save instruction, the CPU 2101 executes the process in Figure 25.

In step S703, the CPU 2101 determines whether it has received a print instruction from the mobile device 2200. More specifically, the CPU 2101 determines whether the "Print" button in the screen of Figure 33 has been selected in the mobile device. If the CPU 2101 determines that it has received the print instruction, the flow advances to step S704 to execute the process in Figure 26.

In step S705, the CPU 2101 determines whether both the save and print processes end. If NO in step S705, the flow returns to step S701 in order to perform an uncompleted process. A button corresponding to a completed process is greyed out so as to inhibit selection of the button.

As described above, according to the first embodiment, the operability of a user who operates a mobile device improves when data in the mobile device 2200 is to be printed from the multifunctional peripheral or data in the multifunctional peripheral is to be saved to the mobile device 2200. More specifically, the multifunctional peripheral according to the first embodiment determines an operation screen to be displayed on the mobile device 2200 on the basis of the display status (whether a file is selected) of the mobile device, and transmits information for displaying a display screen complying with the determined contents. The user can easily understand contents to be designated next, improving the operability.

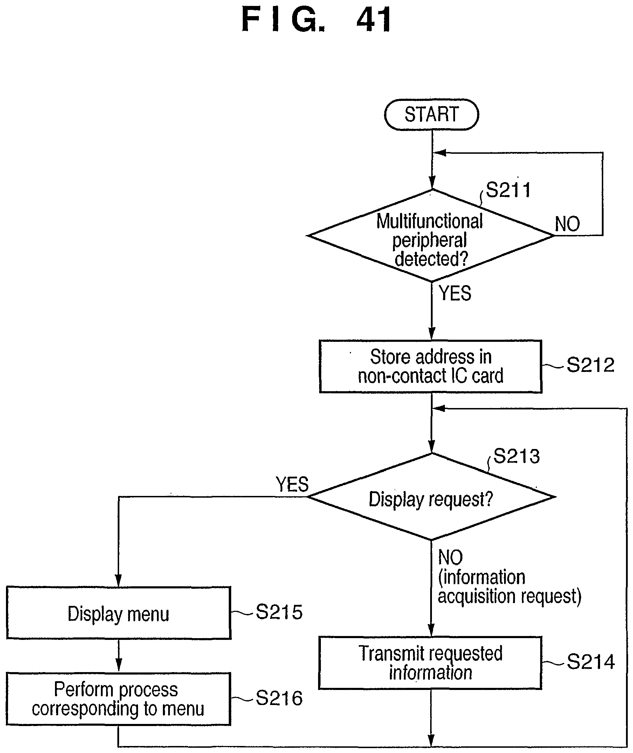

Note that a process in the mobile device 2200 will be described in brief with reference to Figure 41.

In step S211, the mobile device 2200 waits until the multifunctional peripheral 2100 is detected by the non-contact IC card unit 2210. That is, the mobile device 2200 determines whether the multifunctional peripheral 2100 exists within a short distance range (several ten cm).

If the mobile device 2200 determines that the multifunctional peripheral 2100 exists at a short distance, the flow advances to step S212, and the mobile device 2200 acquires a current IP address (the ID address is not fixed when DHCP is used) assigned to the wireless communication unit 2231. The mobile device 2200 stores the IP address in the non-contact IC card unit 2210. A predetermined time is taken from step S211 to step S212. For this reason, address acquisition is repeated during the predetermined time in step S402 of Figure 24 in the multifunctional peripheral 2100.

After that, the flow advances to step S213, and the mobile device 2200 determines whether the information transmitted from the multifunctional peripheral 2100 is a display request or acquisition request. If the mobile device 2200 determines that the information is an acquisition request, the flow advances to step S214, and the mobile device 2200 transmits the requested information (e.g., whether a file is selected) to the multifunctional peripheral 2100.

If the mobile device 2200 determines that the information is a display request, processes in steps S215 and S216 are performed. In this case, a process to display a menu (display the "Save" button and the like in the first embodiment) on the display unit 2206 in accordance with the display request received from the multifunctional peripheral 2100, and a process corresponding to a menu selection instruction by a user are repeated.

### <Second Embodiment>

In the first embodiment, a file to be transmitted to the mobile device 2200 is stored in the multifunctional peripheral 2100, and selected by a user. However, the multifunctional peripheral 2100 comprises the document reader 2111. Thus, the second embodiment will describe an example of, when a document is set on the document reader 2111, reading the set document, transmitting the reading result to the mobile device 2200, and saving it to the mobile device 2200.

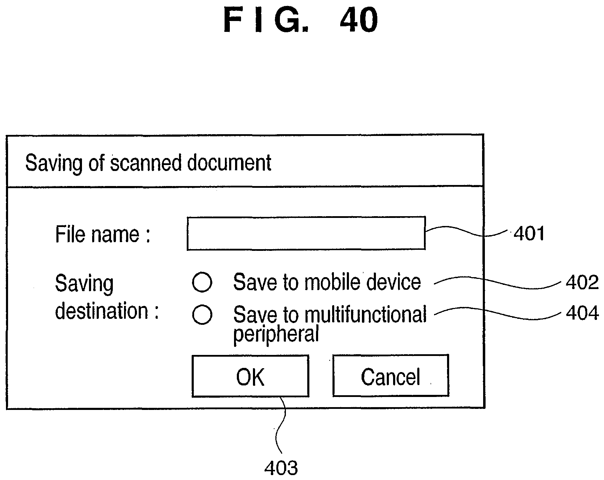

In this case, when a card reader 2117 confirms that a mobile device 2200 exists at a short distance from a multifunctional peripheral 2100, and a document is set on an image reader 2111 of the multifunctional peripheral 2100, a screen shown in Figure 40 is displayed on a display unit 2106 of the multifunctional peripheral 2100. In steps S413 and S416 of Figure 24, it is determined whether the document is set on the image reader 2111 of the multifunctional peripheral 2100.

When the "Save" button is designated in the mobile device 2200, the image reader 2111 starts reading, and converts the reading result into data of a predetermined format. The data size can be determined, and it is confirmed whether there is a memory capacity enough to store data of the determined data size.
Then, the data is transmitted with a designated file name to the mobile device 2200 and saved to it.

When the multifunctional peripheral is selected as a saving destination and the memory capacity enough to save data is not ensured in a hard disk 2103, an error message to this effect is displayed on the display unit 2106, and the save process is interrupted.

The second embodiment has been described, and may also be combined with the first embodiment described above. More specifically, when no document to be read is set in the multifunctional peripheral 2100, the first embodiment is executed. When a document is set, the second embodiment is executed.

In the first and second embodiments, the multifunctional peripheral 2100 transmits, to the mobile device 2200, display request information for a screen having various operation buttons, and the mobile device 2200 displays the screen. However, the screen itself may be transmitted from the multifunctional peripheral 2100 to the mobile device 2200. This arrangement has an effect of obviating the need to prepare display data in the mobile device 2200. In order to implement this arrangement, the multifunctional peripheral 2100 stores files which describe various buttons corresponding to situations and processes when the respective buttons are designated, and transmits one of the files to the mobile device 2200. By describing this file in XML or the like, the mobile device 2200 suffices to have a function of interpreting XML and executing a process.

### <First illustrative example>

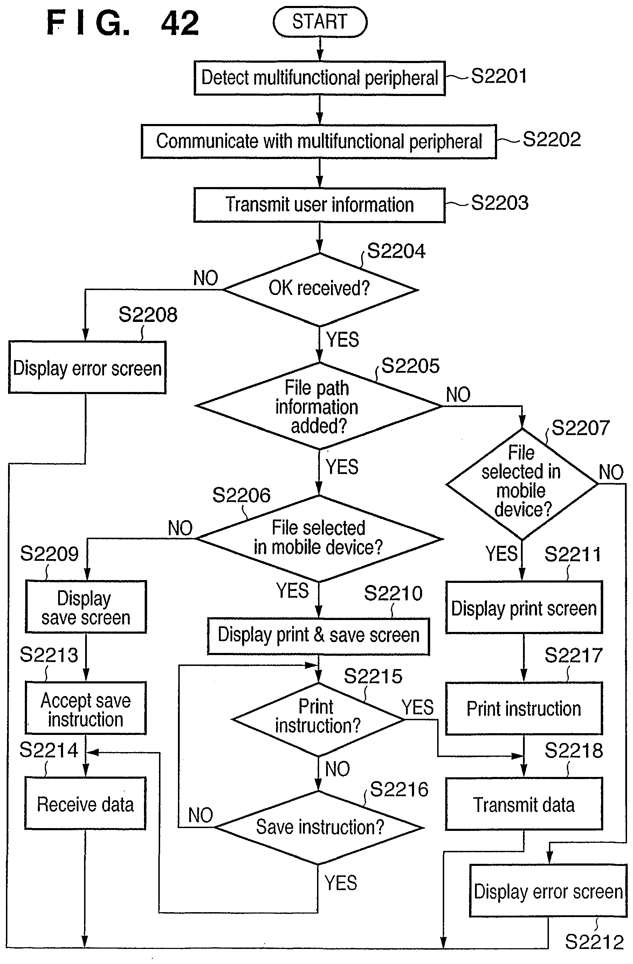

The first and second embodiments have described an arrangement in which the multifunctional peripheral 2100 acquires information on contents displayed on the mobile device 2200, determines a screen to be displayed on the mobile device, and transmits, to the mobile device, an instruction to display the determined screen. However, a screen to be displayed on the mobile device 2200 may be determined by the mobile device. Figure 42 is a flowchart showing the operation of a mobile device 2200 in accordance with a first illustrative example.

In step S2201, a non-contact IC card unit 2210 detects a multifunctional peripheral 2100 by the above-mentioned short distance wireless communication technique such as NFC.

In step S2202, the non-contact IC card unit 2210 communicates with the multifunctional peripheral 2100 by the short distance wireless communication technique such as NFC. More specifically, in step S2203, the non-contact IC card unit 2210 transmits, to the multifunctional peripheral 2100, identification information (e.g., an ID) for specifying the mobile device 2200, and identification information (e.g., a user ID or username) for specifying a user. In step S2203, the non-contact IC card unit 2210 also transmits, to the multifunctional peripheral 2100, information (e.g., the IP address of the mobile device) necessary for subsequent wireless LAN communication.

Upon reception of the information transmitted from the mobile device 2200 in step S2203, the multifunctional peripheral 2100 authenticates a user on the basis of PIN information inputted via the operation unit 2107 of the multifunctional peripheral 2100. More specifically, the multifunctional peripheral 2100 determines whether PIN information registered in advance in the multifunctional peripheral 2100 and a user ID corresponding to the PIN information match PIN information inputted via the operation unit and the user ID received in step S2203. If the multifunctional peripheral 2100 determines as a result of user authentication that the mobile device can utilize the multifunctional peripheral 2100, it sends back "OK" to the mobile device 2200. If the multifunctional peripheral 2100 determines that the mobile device cannot utilize the multifunctional peripheral 2100, it sends back "NG" to the mobile device 2200.

In step S2204, a control unit 2205 determines whether it has received "OK" from the multifunctional peripheral 2100, i.e., authentication is successful. If the control unit 2205 has received "OK" in step S2204, the flow advances to step S2205; if the control unit 2205 has received "NG", to step S2208.

In step S2208, the control unit 2205 causes a display unit 2206 to display an error screen indicating that authentication fails.

In step S2205, the control unit 2205 determines whether information (e.g., URL indicating the storage destination of a file) indicating the path of a file stored in the mobile device 2200 is added to data indicating "OK" received from the multifunctional peripheral 2100. When a file stored in the multifunctional peripheral 2100 is selected by a user in the screen shown in Figure 29, the multifunctional peripheral 2100 sends path information indicating the file in sending back a user authentication result to the mobile device 2200. That is, the multifunctional peripheral 2100 allows the user to arbitrarily select data to be transmitted to the mobile device 2200 from data stored in the multifunctional peripheral 2100. If the control unit 2205 determines in step S2205 that the file path information is added, the flow advances to step S2206; if the control unit 2205 determines that no file path information is added, to step S2207.

In step S2206, the control unit 2205 determines whether any file is selected in the mobile device 2200. That is, the control unit 2205 determines whether the screen displayed on the display unit 2206 is the display screen shown in Figure 30. The mobile device 2200 allows the user to arbitrarily select data to be printed by the multifunctional peripheral 2100 from data held by the mobile device. If the control unit 2205 determines in step S2206 that a file is selected, the flow advances to step S2210; if the control unit 2205 determines that no file is selected, to step S2209.

In step S2209, the control unit 2205 controls the display unit 2206 to display a screen for designating saving of a file. More specifically, the control unit 2205 causes the display unit 2206 to display the display screen shown in Figure 31.

In step S2213, the control unit 2205 accepts a "Save" selection instruction in the display screen of Figure 31. That is, the control unit 2205 recognizes that the user designates saving of the file selected in the multifunctional peripheral 2100. In step S2213, the control unit 2205 accepts the "Save" instruction, and the flow advances to step S2214.

In step S2214, the control unit 2205 controls a wireless communication unit 2231 to wirelessly communicate with the multifunctional peripheral 2100. At this time, information necessary for wireless communication (e.g., IP addresses transmitted and received in steps S2202 and S2203) is used. In step S2214, the wireless communication unit 2231 receives the file selected in the multifunctional peripheral 2100 by wireless communication such as the wireless LAN with the multifunctional peripheral 2100. The file received in step S2214 is stored in the mobile device 2200.

In step S2210, the control unit 2205 controls the display unit 2206 to display a screen for designating saving and printing of a file. More specifically, the control unit 2205 causes the display unit 2206 to display the display screen shown in Figure 33.

In step S2215, the control unit 2205 determines whether "Print" in the display screen of Figure 33 is selected and designated. That is, the control unit 2205 recognizes that the user designates printing of the file selected in the mobile device 2200. If "Print" is selected, the flow advances to step S2218; if no "Print" is selected, to step S2216.

In step S2216, the control unit 2205 determines whether "Save" in the display screen of Figure 31 is selected. That is, the control unit 2205 determines whether the user designates saving of the file selected in the multifunctional peripheral 2100. If "Save" is selected, the flow advances to step S2214.

In step S2207, the control unit 2205 determines whether any file is currently selected in the mobile device 2200. That is, the control unit 2205 determines whether the screen displayed on the display unit 2206 is the display screen shown in Figure 30. If the control unit 2205 determines in step S2207 that a file is selected, the flow advances to step S2211; if no file is selected, to step S2212.

In step S2212, the control unit 2205 causes the display unit 2206 to display a display screen for notifying the user that no file is selected. More specifically, the control unit 2205 causes the display unit 2206 to display the display screen shown in Figure 34.

In step S2211, the control unit 2205 controls the display unit 2206 to display a screen for designating printing of a file. More specifically, the control unit 2205 causes the display unit 2206 to display the display screen shown in Figure 32.

In step S2217, the control unit 2205 accepts a "Print" selection instruction in the display screen of Figure 32. That is, the control unit 2205 recognizes that the user designates printing of the file selected in the mobile device 2200. In step S2217, the control unit 2205 accepts the "Print" instruction, and the flow advances to step S2218.

In step S2218, the control unit 2205 controls the wireless communication unit 2231 to wirelessly communicate with the multifunctional peripheral 2100. At this time, pieces of information necessary for wireless communication (e.g., IP addresses transmitted and received in steps S2202 and S2203) are used. In step S2218, the wireless communication unit 2231 receives the file selected in the mobile device 2200 by wireless communication such as the wireless LAN with the multifunctional peripheral 2100. The file transmitted in step S2218 is printed by the multifunctional peripheral 2100.

According to the first example, the multifunctional peripheral 2100 need not manage information of a screen to be displayed on the mobile device 2200. The operability of a user who operates the mobile device further improves because the display screen of the mobile device automatically switches to the next one for operating the mobile device after authentication of the mobile device and multifunctional peripheral is performed.

As for the authentication process of the mobile device and multifunctional peripheral, data are exchanged using a predetermined short distance wireless communication technique such as NFC. A process to transfer a file to be stored in the multifunctional peripheral to the mobile device, and a process to transmit data of the mobile device to the multifunctional peripheral use wireless communication such as the wireless LAN capable of transferring data at a higher speed than by the short distance wireless communication technique. Wireless communication can shorten the data transfer time, and the user can move apart from the multifunctional peripheral in data transfer.

In the first and second embodiment and first example, PIN information is inputted by a user from the multifunctional peripheral 2100. However, PIN information and user information may be stored in the non-contact IC card unit. In some cases, the PIN information authentication process may be omitted. In this case, the user brings the mobile device 2200 to the communication range (about 10 cm) of the card reader 2117 of the multifunctional peripheral 2100. After it can be detected that the multifunctional peripheral 2100 and mobile device 2200 are close to each other, communication by the wireless LAN can start. After that, the user can perform a normal operation with the mobile device 2200 held in his hand in a natural manner without holding the mobile device 2200 over the multifunctional peripheral 2100, thereby improving operability.

In the embodiments and example, user authentication is performed by the multifunctional peripheral 2100. Alternatively, an authentication server may be installed on a network, notified of user information acquired by the multifunctional peripheral 2100 from the mobile device 2200, and perform a process upon reception of an authentication permission/inhibition reply.

The embodiments and example have exemplified a copying machine, but the present invention can also be applied to a single output apparatus such as a printer or FAX apparatus. When the FAX apparatus is used, a file received from the mobile device 2200 may be temporarily converted into image data to FAX-transmit the image data. The embodiments and example have exemplified the mobile phone as a mobile device, but the present invention may also be applied to any mobile type electronic device such as a PDA or notebook PC. The embodiments and example have exemplified NFC (ISO/IEC IS 18092) as the short distance communication technique, but the present invention is not limited to this. For example, the same effects can be attained when the multifunctional peripheral 2100 has an infrared communication unit of downward directivity and the mobile device 2200 also has an infrared communication interface. In the embodiments and example, the short distance wireless communication technique is utilized at the initial stage of communication between the multifunctional peripheral and the mobile device, and the wireless LAN of a wider communication band is utilized in actual file transfer. However, only short distance wireless communication may be done.

In order to further enhance security, when a file is transferred from the multifunctional peripheral 2100 to the mobile device 2200 and saved to the mobile device 2200, the save log may be saved to the multifunctional peripheral 2100 or a predetermined server. As information saved at this time, the saved-file name, the PIN and user information of the mobile device, and date & time information when the file is saved (transmitted from the multifunctional peripheral 2100) are stored. When information is saved to the server, information for identifying the multifunctional peripheral is saved together in consideration of a case where many multifunctional peripherals 2100 exist. The administrator can freely browse the log information.

As described in the first and second embodiment and first example, the operability of the mobile device further improves because the mobile device and image forming apparatus communicate with each other, and the operation screen of the mobile device is changed in accordance with the operation status of the mobile device or that of the image forming apparatus in a communicable state.

### <Other Embodiments and examples>

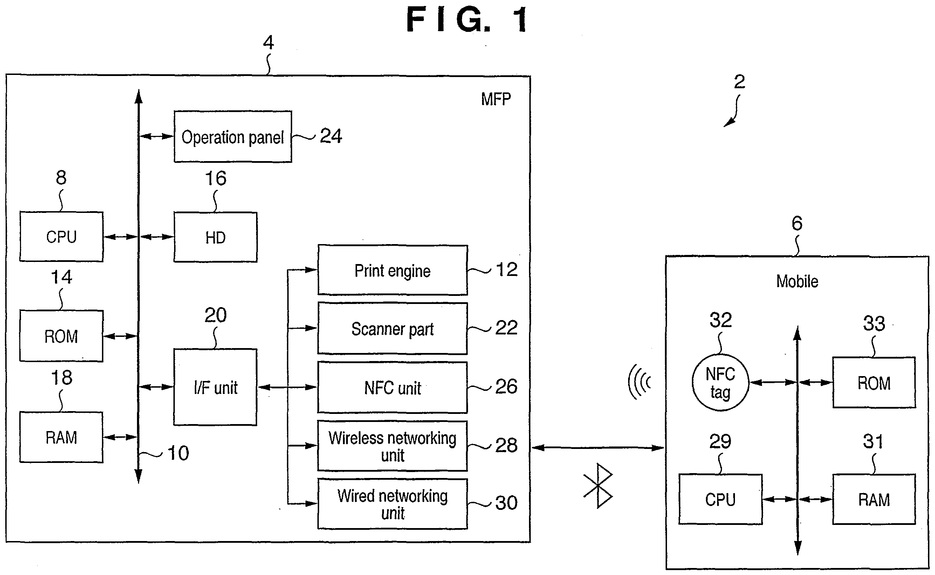

Figure 1 shows an example of a document data transfer system 2 in accordance with the invention, comprising an MFP 4 connected to a network (not shown), and a near field communication (NFC)-enabled mobile phone 6.

The MFP 4, for example a Canon iR3220N photocopier, comprises a CPU 8 outputs integrally controls each of the devices connected to the system bus 10. The CPU 8 outputs an image signal as output information to a print engine 12 based on the control program, etc, stored in either the read only memory (ROM) 14 or hard disc (HD) 16. The ROM 14 also stores information, etc, to be used in the cases where the MFP does not have a hard disk. Random access memory (RAM) 18 functions, inter alia, as a main memory and a work area of CPU 8. I/F unit 20 controls documents to be printed by print engine 12 and documents scanned by scanner part 22. Operation panel 24 enables the display of information to, and receipt of input from, a user via a touch-sensitive screen, for example. NFC 26 and wireless 28 capabilities provide means for communicating with other devices, and the MFP 4 is also provided with wired networking capability 30.

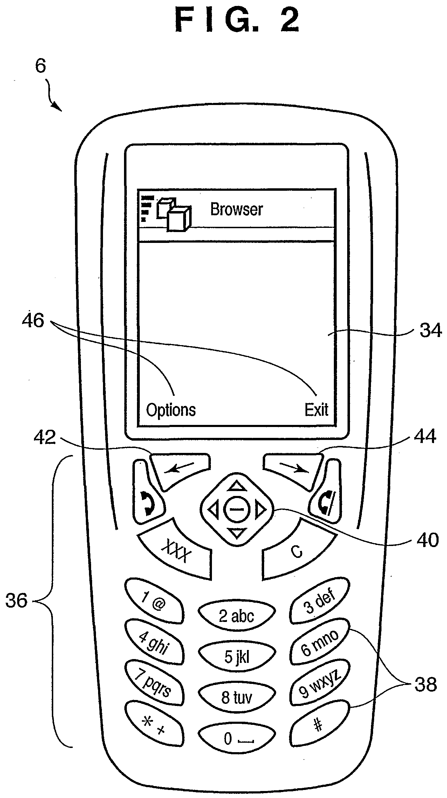

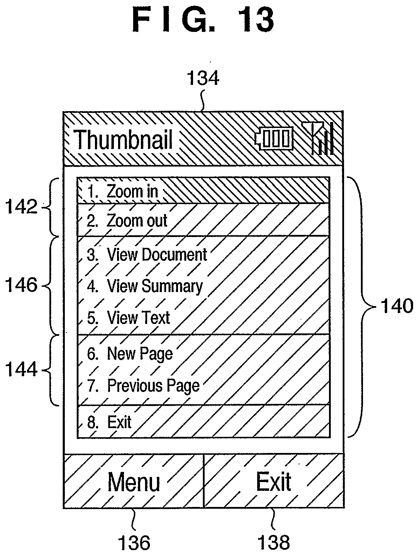

The mobile phone 6 has an NFC tag 32, CPU 29, RAM 31 and ROM 33. CPU 29 controls each unit, shown in Figure 1, of the mobile phone 6. A document data transfer software application, executing the steps shown in the flowchart of Figure 13, is stored in ROM 33. The mobile phone is shown in more detail in Figure 2, and comprises a display 34 and keypad 36. The keypad 36 comprises number buttons 38, navigation key 40 and menu buttons 42, 44. Soft keys 46 are selected by depressing menu buttons 42, 44. Navigation key 40 can be depressed in five ways, namely at the top (to move up), bottom (to move down), left (to move left), right (to move right), and in the centre (to select soft buttons displayed in the central part of the display 34).

In the document data transferred system 2, document data can be transferred from the MFP 4 to the mobile phone 6 or from the mobile phone 6 to the MFP 4.

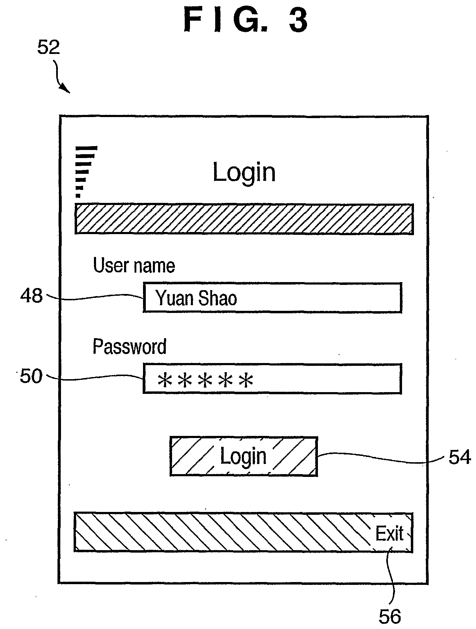

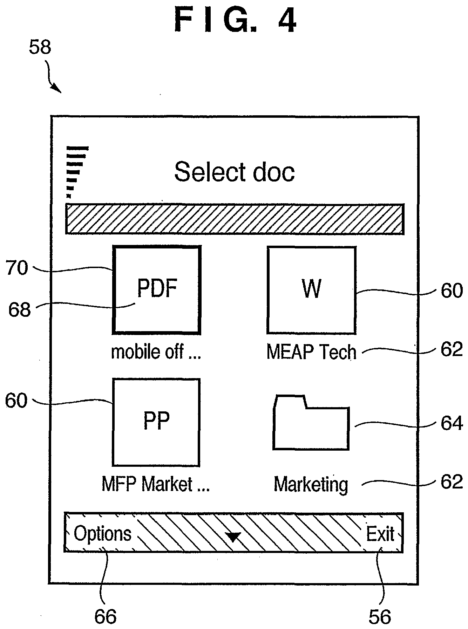

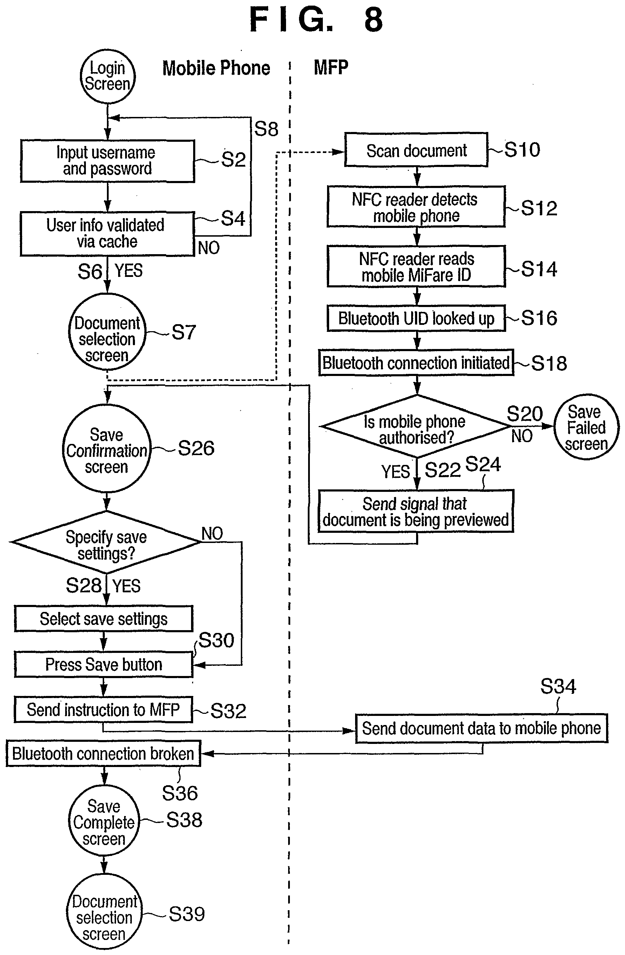

Referring to Figures 1 to 8 together, in a first usage example, a user with a paper document wishes to save a copy to his mobile phone, for distributing to others or for saving to a location not connected to a network currently available to the user. The user logs onto the document data transfer software application via his mobile phone 6, as shown in Figure 3, inputting (Step S2 in Figure 8) a username 48 and password 50 via a Login screen 52. The Login soft key 54 is selected by depressing the centre of navigation key 40. The user can exit from the Login screen 52 by selecting the Exit soft key 56 by depressing menu button 44. The mobile phone CPU 29 receives the username and password inputted via the Login screen 52 and temporarily stores the inputted data in RAM 31. The user identification (ID) information is validated (S4) against a cache stored in the mobile phone RAM 31. If the user authentication is successful (S6), the Document Selection screen 58, illustrated in Figure 4, is displayed (S7) on the screen 34 of the mobile phone 6; otherwise, the user is returned (S8) to the Login screen 52. This local verification of the account executed by the document data transfer software application on the mobile phone 6 gives the user access to the document data transfer system 2. The requirement to login via the mobile phone 6 helps prevent unintentional start up of communication between the mobile phone 6 and MFP 4 when, for a example, a user approaches an MFP 4 with a mobile phone 6 in his pocket. The Document Selection screen 58 shows icons 60, indicating document data stored on the mobile phone 6, each with an associated name 62. Further document data is stored in folder 64. Selection of the Exit soft key 56 causes the user to leave the document data transfer software application. Options soft key 66 provides the user with the option, for example, of previewing the document. An icon 60 may be selected using the keypad 36, the selected document icon 68 being marked by border 70.

In order to transfer document data to the mobile phone 6, the user scans (S10) a document into the MFP 4. The scanned document is received by scanner part 22 and the I/F unit 20 passes the document on to be previewed on the display of the MFP operation panel 24. A copy of the document is stored in a document store on the hard drive 16, RAM 18 or network (not shown). When the user brings the mobile phone 6 into proximity with the NFC reader 26 of the MFP 4 after a successful login to the document data transfer software application via the mobile phone 6, the NFC reader 26 detects (S12) the presence of the mobile phone NFC tag 32 and reads (S14) the unique identifier, for example MiFare ID, of the mobile phone NFC tag 32.

NFC is a bi-directional radio communication system between NFC-enabled devices, which operates in the radio frequency band of 13.56MHz. Predetermined electromagnetic-wave carriers modulated using digital data are transmitted, the transmitted electromagnetic waves are received by an antenna, and the digital data modulated on the carrier signal is demodulated. NFC may be half-duplex communication in which two devices transmit electromagnetic waves of a common frequency. Alternatively, NFC may be full-duplex communication in which two devices transmit electromagnetic waves of differing frequencies. An allowable NFC communication distance is typically about 10cm. NFC can be used to quickly establish other types of wireless communications between devices without the usual lengthy setup procedures, acting as a virtual connector, enabling devices to communication at longer ranges or transfer data at higher rates.

The CPU 8 uses the MiFare ID to look up (S16) the Bluetooth user identifier (UID) of the mobile phone 6 in a database stored on the network. The CPU 8 initiates (S18) a connection with the mobile phone 6 over a wireless network via wireless networking unit 28, using Bluetooth protocols. Once a Bluetooth connection is established, the mobile phone 6 can be moved further apart from the MFP 4, within the Bluetooth communication range, for convenience.

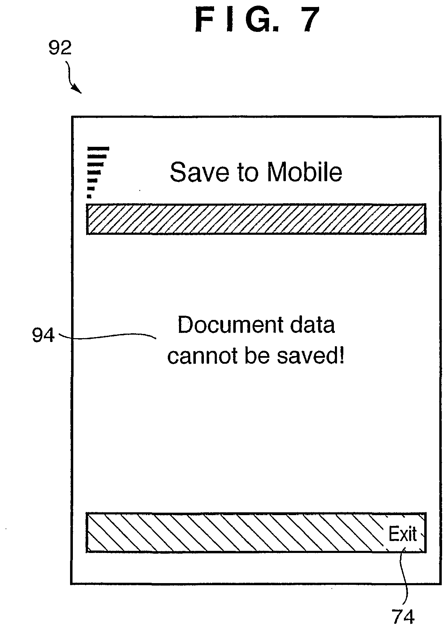

The system is arranged to only save the document data to the mobile phone 6 if the mobile phone 6 is registered in a database stored on the network or MFP 4. This stops the transfer of document data to mobile phones of users without security rights to prevent such unauthorised users from leaving the office with an electronic version of the document. If a user attempts to save a document to a mobile phone which has not been registered (S20), a Save Failed screen 92 is displayed on the mobile phone 6, as shown in Figure 7, with a message 94 informing the user that the document data cannot be saved. Exit soft key 74 allows the user to return to the Document Selection 58.

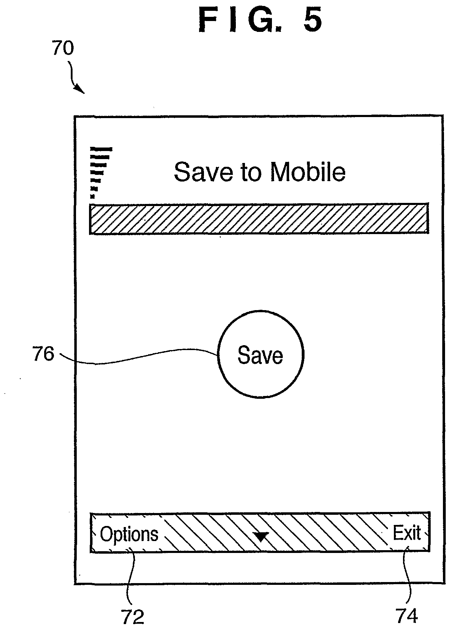

If the mobile phone 6 is authorised (S22), a signal is sent (S24) to the mobile phone 6 indicating that a document is being previewed on the MFP 4. As no document is selected on the mobile phone 6 when this signal is received, a Save Confirmation screen 70 is displayed (S26) on the mobile phone display 34, as shown in Figure 5. An Options soft key 72 is provided for user input of options (S28). For example, a user can request the transfer to the mobile phone 6 of the document or a reference to the document. Document references uniquely correspond to a document, and contain sufficient information for the system to identify a location of the document, as in the case of uniform resource locators (URLs). The document reference may have any suitable format, such as C:¥mydocs¥folder¥docname. Selection of the Exit soft key 74 returns the user to the Document Selection screen 58.

On selection of the Save button 76 by depressing the centre of the navigation key 40 (S30), an instruction is sent (S32) from the mobile phone 6 to the MFP 4 to cause the document data to be transferred (S34) from the MFP 4 to the mobile phone 6 via Bluetooth. The document data comprises the document, or the document reference if requested by the user.

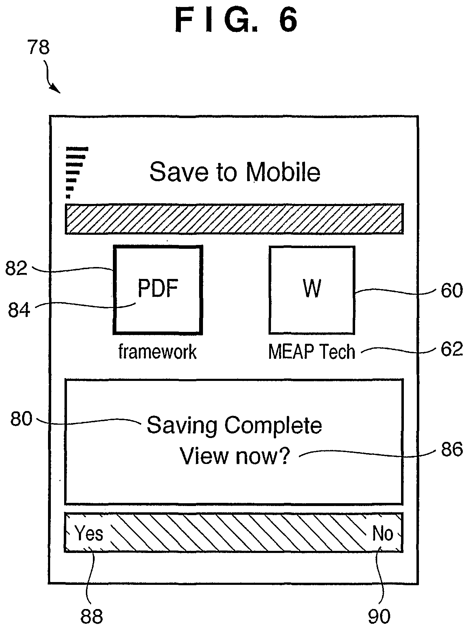

Upon completion of the document data transfer to the mobile phone 6, the Bluetooth connection is broken (S36). When the expected number of bytes has been received, a Save Complete screen 78 is displayed (S38) on the mobile phone display 34, as shown in Figure 6. A message 80 indicates the transfer has been completed and an icon representing the document data transferred to the mobile phone 6 is shown, in a similar manner to the Document Selection screen 58, with border 82 highlighting the saved document icon 84. The user is provided with the option 86 to view the document, by selecting either the Yes soft key 88 or the No soft key 90. After viewing, or if the viewing option is declined, the mobile phone display 34 returns to the Document Selection screen 58.

Once the document data is saved to the mobile phone 6, the document or document reference can be sent to another mobile phone by, for example, multimedia messaging service (MMS) or short messaging service (SMS).

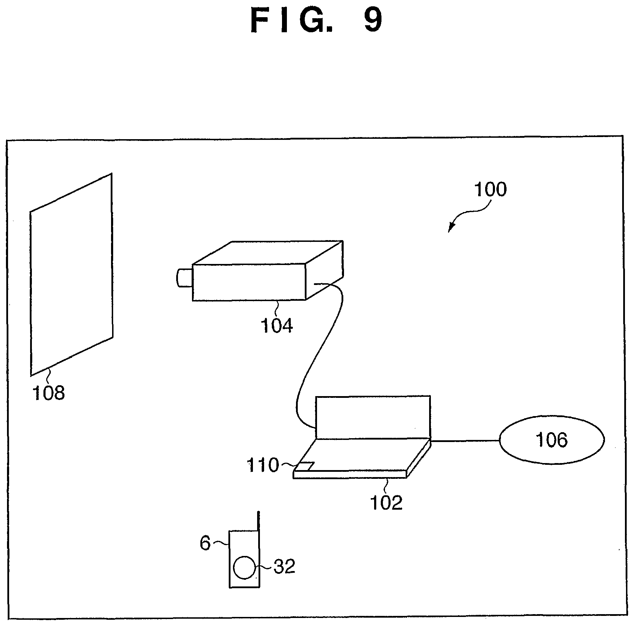

In another example in accordance with the invention a projection system is used to preview a document. Figure 9 shows a projection system 100 comprising a networked laptop 102 connected to a projector 104. A meeting delegate wishing to store a copy of another delegate's document to his mobile phone 6, for future use at another office location, logs onto the document data transfer software application via the Login screen 52 on his mobile phone 6, shown in Figure 3. The document, stored either on the laptop 102 or the network 106, is displayed on the projection screen 108.

The meeting delegate brings the mobile phone 6 into proximity with the NFC reader 110 of the laptop 102 to initiate an NFC communication between the mobile phone 6 and laptop 102. Once a Bluetooth connection is established between the mobile phone 6 and the laptop 102 as described previously, a signal is sent to the mobile phone 6 indicating that a document is being previewed on the projection screen 108. AS the user has not selected a document on the mobile phone 6, the signal triggers the display of a Save Confirmation screen 70 on the mobile phone 6, as shown in Figure 5.

On selection of the Save button 76, the document data is transferred from the laptop 102 to the mobile phone 6 via Bluetooth.

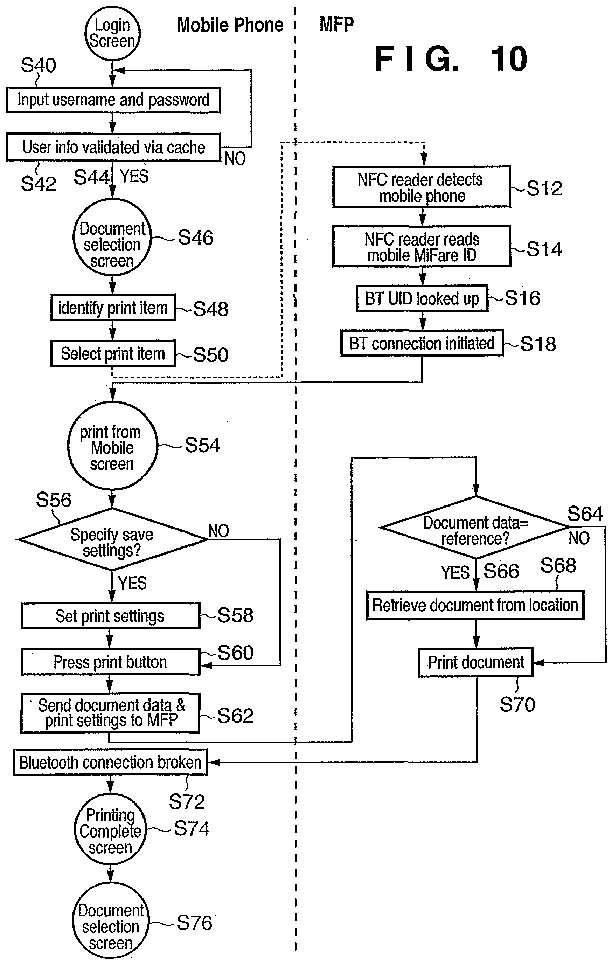

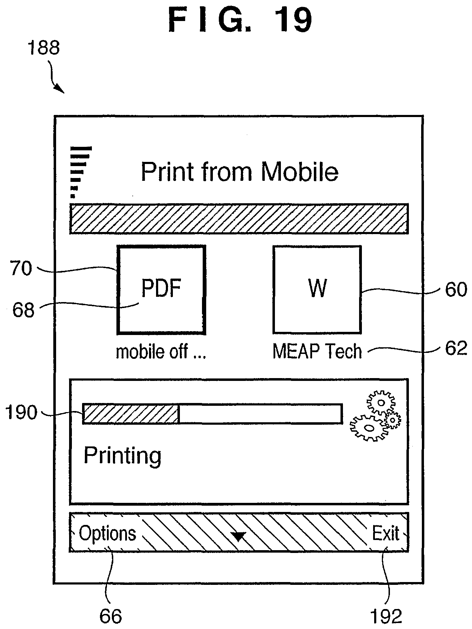

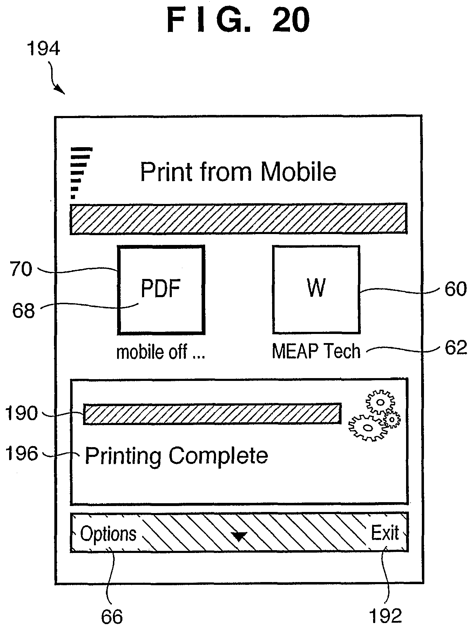

In a further example in accordance with the invention, a user prints a document stored on a mobile phone using the document data transfer system 2 illustrated in Figure 1. Referring to Figures 1 to 4 and 10 to 20, the user logs in to the document data transfer software application via the mobile phone 6, inputting (step S40 in Figure 10) a username 48 and password 50 via a Login screen 52 shown in Figure 3, for validation (S42) via a cache stored in the mobile phone RAM 31. On successful verification (S44) of the user, the Document Selection screen 58 shown in Figure 4 is displayed (S46) on the display 34 of the mobile phone 6. Using the keypad 36 of the mobile phone 6, the user selects (S50) a document from the list of icons 60 shown on the Document Selection screen 58.

As the name 62 of the document may not include enough detail for the user to identify (S48) the document, the user is provided with the option of previewing each document. Due to the size of mobile phone displays, it is difficult to read text on pages originally formatted for printed A4 or desktop PCs. High-resolution images for all pages within the documents could be produced but transferring and storing these images is more problematic. The images would need to be high resolution to ensure each page is readable and therefore the image data could be larger than the document itself.

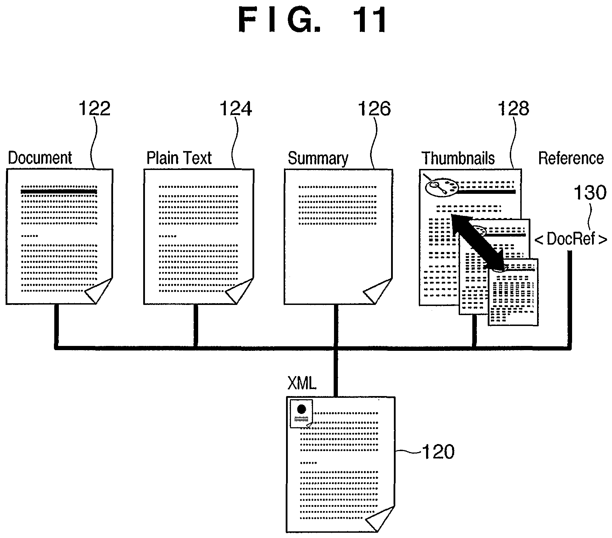

In order to allow the user to identify (S48) a document, the document is rendered into several formats, namely plain text, summary, and thumbnails, which are stored as supplementary files. As illustrated in Figure 11, the supplementary files of plain text 124, summary 126, thumbnails 128, and other metadata (not shown), for example document attributes, are sent embedded in an XML file bundle 120, along with a document reference 130 and the document 122. The supplementary files may alternatively be sent as separate entities, referenced by the XML file bundle 120. The bundle 120 may be zipped during transfer and storage.

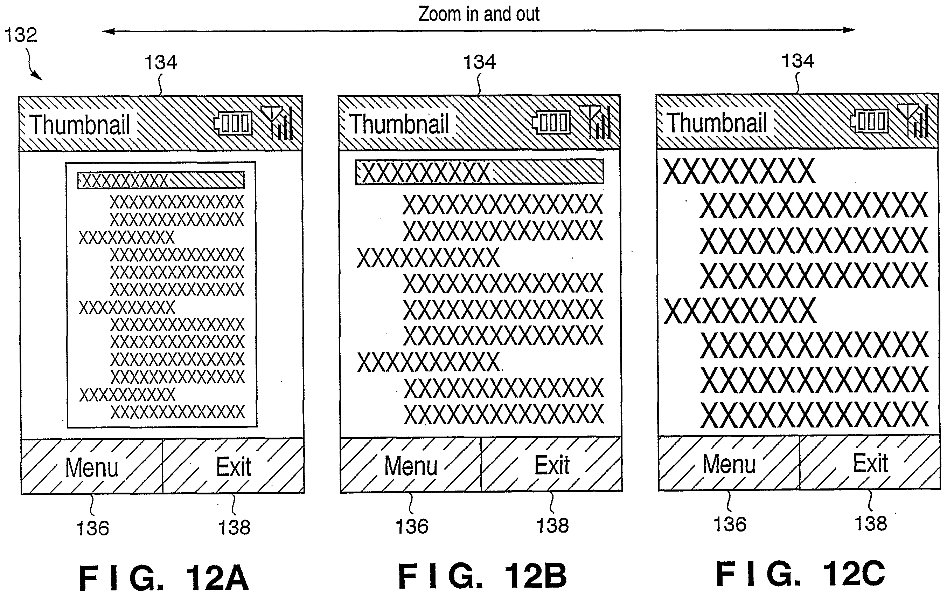

The Options soft key 66 in the Document Selection screen 58 provides the user with the option of previewing a selected document. The default state of the Preview screen 132 is a thumbnail view of the document, as shown in Figure 12A. Header 134 identifies the current view as 'Thumbnail'. A Menu soft key 136 provides the user with a menu 140, shown in Figure 13, with options to zoom in and out 142, switch pages 144 and to change to one of the other views 146. Header 134 remains visible to allow the user to identify which view he is currently in.

Thumbnail images of the first two pages of the document aid the user in identifying the document, giving an idea of the layout and formatting. The user is able to zoom in from the default view shown in Figure 12A, for more detailed view as shown in Figures 12B and 12C, and the software allows the user to pan around the images where necessary, using keypad 36. Selection of the Exit soft key 138 returns the user to the Document Selection screen 58.

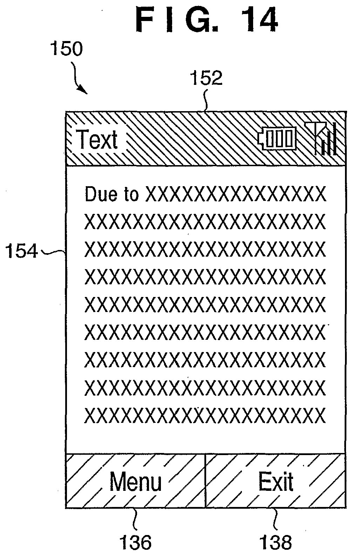

In plain text view 150, shown in Figure 14, the plain text 152 of at least part of the document is displayed, allowing the user to read the text of the document, which may not be possible with the thumbnail resolution provided. The mobile phone 6 is able to display the text in an easy-to-read format avoiding the need for the user to pan around the document. Header 154 identifies the view as 'plain text'.

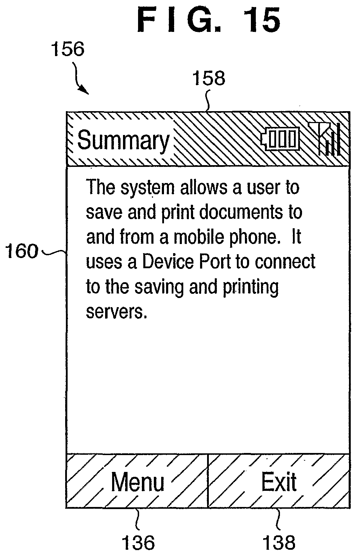

Figure 15 shows the summary view 156, identified by header 158. A summary of the document 160 in plain text captures the body of the document in a condensed form by providing a précis, for example a computer-generated abstract, of its main points.

Once it has been verified that the selected icon relates to the document data intended for transfer to the MFP 4 for printing, the user brings (S52) the mobile phone 6 into proximity with the NFC reader 26.

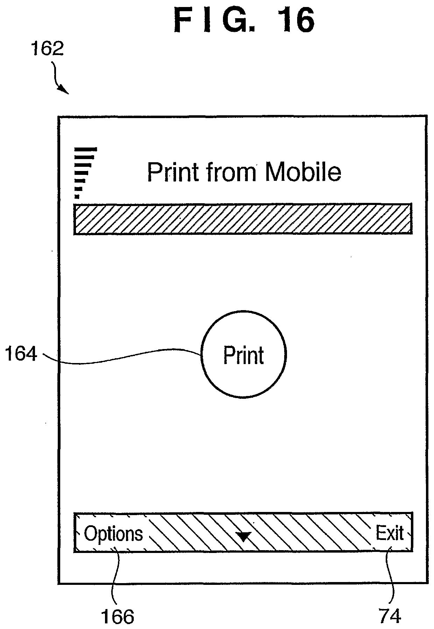

Once a Bluetooth connection is established between the mobile phone 6 and the MFP 4, the fact that a document is selected on the mobile phone 6 acts as a trigger for a Print From Mobile screen 162 to be displayed (S54) on the mobile phone display 6, as shown in Figure 16. The Print From Mobile screen 162 has an easy-to-read Print button 164 and an Options soft key 166 and an Exit soft key 74. Selection of the Exit soft key 74 on the mobile phone display 34 returns the user to the Document Selection screen 58.

Selection of the Options soft key 166 gives the user the option of, inter alia, requesting the document is also saved to a directory previously assigned to the user and configured on the network.
The Options soft key 166 also enables a user to change print settings.

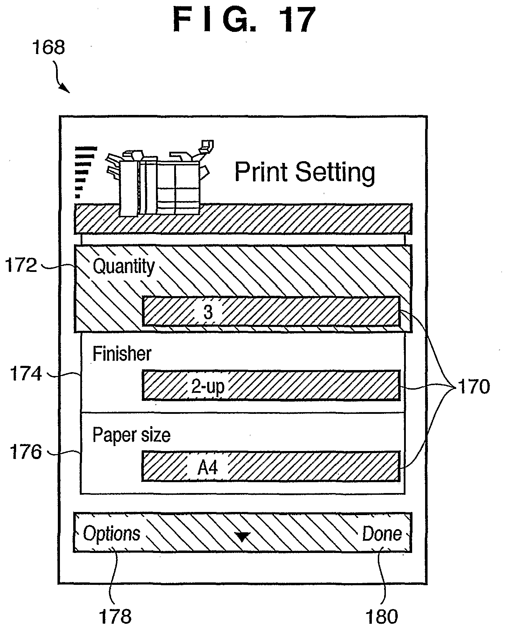

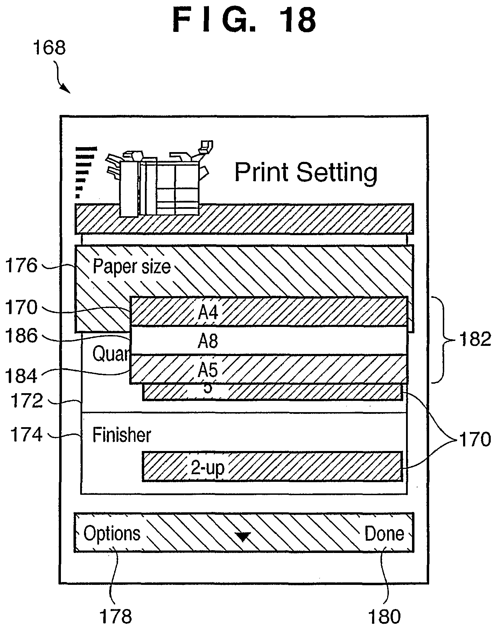

A Print Settings screen 168 for setting (S56) the print mode is shown in Figure 17. The default values 170 of Number of Copies 172, Page Layout 174, and Paper Size 176 are shown, with other print settings available on selection of Options soft key 178. The default values are set to user-preferred settings, but may be the values set as default for the selected document. Selection of the Done soft key 180 returns the user to the Print From Mobile screen 162. The user uses the keypad 36 to select the print setting he wishes to change and selects Alter Settings in the options menu under the Options soft key 178. Figure 18 shows the changing of the Paper Size print setting 176, with a choice of values given in a drop-down list 182. The values in the drop-down list 182 are those available with the MFP 4 of the document data transfer system 2. Only those available given the current status of the MFP 4 can be selected, with those options not available for selection being grayed out. As shown in Figure 18, A5 paper size 184 is not available for selection, indicating the MFP 4 has run out of A5 paper. The user is able to select from the default setting 170 of A4 and any other available option 186. Done soft key 180 saves the selected print setting values (S58). The print settings are sent by the mobile phone 6 to the MFP 4 with the document or document reference as a message header.

As a result of selecting (S60) the Print button 164 by depressing the centre of the navigation button 40, a premium SMS is sent by the mobile phone 6 to a charging centre (not shown). The document data transfer system 2 waits for a response from the charging centre before proceeding; on receipt of a response, the document data is sent (S62), together with the print settings, from the mobile phone 6 to the MFP 4 via Bluetooth. The charging centre arranges for payment to be made via a user account. When the document data is a document (S64), the CPU 8 sends the document to the print engine 12 via I/F unit 20 for printing (S70). When the document data is a document reference (S66), the CPU 8 retrieves (S68) the document from the location identified by the reference, and sends the document to the print engine 12 for printing (S70), via the I/F unit 20.

During the transfer of the document or document reference to the MFP 4, a Printing Progress screen 188 is displayed on the mobile phone display 34, as shown in Figure 17. A printing progress bar 190 indicates the progress of the printing operation, and the document being printed is indicated by border 70 around icon 68, so that the user can easily see which document is being printed. Options soft key 66 is grayed out and unavailable for selection. Selection of the Exit soft key 192 cancels the printing operation.

Once the transfer of document data is complete, the Bluetooth connection is broken (S72), and the Printing Complete screen 194, illustrated in Figure 18, is shown (S74) on the mobile phone display 34 with a message 196 indicating that the printing operation is complete. The mobile phone display 34 then returns to the Document Selection screen 58.

Having now described embodiments of the invention, numerous modification will become apparent to the skilled person. For example, while the above embodiments have been described with the NFC reader detecting the presence of a mobile phone NFC tag and reading the MiFare ID, the NFC reader could read the mobile phone Bluetooth address from the mobile phone directly. This would remove the need for a database of MiFare IDs and Bluetooth UIDs, and new mobile phones could be used without requiring the database to be modified.

The NFC tag could be attached to an external or internal surface of the mobile phone, or may be separate from the mobile phone, for example in the form of a key fob.

The NFC reader could be located in any part of the projection system, such as the projection screen, rather than the laptop.

Alternatively, the NFC reader may be attached to the mobile phone and the NFC tag to the MFP or projection system.

The zoom function within the document view used for previewing documents on the mobile phone may be provided by several medium-resolution images at different scales or by one image with a method to scale being provided by an image manipulation system.

The projection system, MFP, or other display device could be used to preview contents of a removable memory medium or any networked document store, prior to saving the document or reference to the mobile phone.

The wireless networking may use protocols other than Bluetooth.

When printing documents from a mobile phone, the documents may be located in a remote document store, for example a document management system. In this case, documents are browsed via a mobile phone client, communicating with the document store via General Packet Radio Service (GPRS), for example.

In addition or as an alternative to saving the document to a user's directory previously configured on the network, the system may be arranged to email a copy of the document to the user.

The document data transfer system may be arranged to automatically save a copy of the document to the user's directory in addition to printing the document; a Print & Save button rather than a Print button may be displayed in order to indicate the saving of a copy of the document to the user's directory.

If a document is selected on the mobile phone, and a document is previewed on the MFP when the NFC communication is established, the mobile phone displays a message requesting a user to confirm whether they wish to print or save a document.

If a user brings a mobile phone into proximity with the NFC reader on a device without a document selected or previewed on either device, an error screen may be displayed on the mobile phone, and the display then returns to the document selection screen.

Document data may be transferred between a mobile phone and a device other than an MFP, for example a personal computer. When transferring a document from the mobile phone to the computer, a window may appear on the computer display, showing the contents of a previously configured user directory into which the document is transferred.

A mobile phone identifier may be used by the system to retrieve information on user preferences in order to determine whether the default save setting should be a document or a reference to the document. This default may be overridden via an Options soft key or equivalent.

The system may provide only those options for which the user is authorised, for example black and white, and not colour, printing.

Security settings may be set at various levels, for example at the document level with each document having associated authorised mobile phones. Additional security may be provided by a requirement for user verification at the mobile phone, MFP or other device, by means of biometric data, for example.

While there is no need for the document data, for example supplementary files, to be stored by the MFP after transfer of the document data to the mobile phone, the data may be stored in a cache so that there is no need for regeneration the next time a user requests the same document.

The user may be charged for the document data transfer system in a variety of ways other than mobile dynamic processing. For example, the user may be required to pay prior to using the system. On payment, the user is given a login ID which allows access to the document data transfer system. Alternatively, the e-wallet function found on many mobile phones may be used.

## Claims

1. A system comprising an image forming apparatus (2100) having communication means (2117, 2109) for communicating with a mobile device (2200) and a mobile device (2200), the image forming apparatus comprising:
detection means for detecting (S401) that the mobile device exists in a range of a predetermined distance,
acquisition means configured to acquire, by sending a request message to the mobile device to inquire whether a file has been selected on the mobile device via said communication means (2109), information indicating a display content displayed on the mobile device when the detection means detects that the mobile device exists in the range of the predetermined distance;
determining means configured to determine, in a case where said acquisition means acquires information indicating that a file held by the mobile device is selected, that a print screen of the file should be displayed on the mobile device; and
transmission means configured to transmit, to the mobile device via said communication means, a print screen display request when said determining means determines (S416, NO) that the print screen should be displayed on the mobile device, and
the mobile device comprising:
communication means configured to communicate with the image forming apparatus;
the mobile device being configured to:
receive the print screen display request causing the mobile device to display a screen including a print button;
send a print instruction to the image forming apparatus in response to selection of the print button by a user; and
send the selected file to be printed to the image forming apparatus.

2. A system according to Claim 1 wherein
said communication means of the image forming apparatus includes first communication means (2117) for performing communication at a short distance, and second communication means (2109) higher in communication speed than said first communication means,
wherein said detection means determines whether the first communication means can communicate with the mobile device, and thereby detects that the mobile device exists in the range of the predetermined short distance.

3. A system according to Claim 1, the image forming apparatus further comprising:
storage means (2103) for storing a file; and
file selection means (801) for selecting a file stored in the storage means,
wherein in a case where a file stored in the storage means is selected by the file selection means (S413, YES), said determination means is configured to determine that a save screen for saving the selected file should be displayed on the mobile device, and said transmission means (2117) is configured to transmit (S415) a save screen display request to the mobile device for displaying the save screen on the mobile device.

4. A system according to Claim 3 wherein, in a case where the acquisition means does not acquire the information indicating that a file held by the mobile device is selected (S412, NO) and no file is selected by said file selection means (S413, NO), said determination means determines that an error notification screen should be displayed (S414) on the mobile device, and said transmission means is configured to transmit (S414) information for displaying a screen for making an error notification.

5. A system according to Claim 4 wherein said communication means (2117) of the image forming apparatus includes wireless communication means, and the mobile device (2200) includes a mobile phone.

6. A method of controlling a system including an image forming apparatus (2100) having communication means (2117) for communicating with a mobile device (2200) and a mobile device, comprising steps performed by the image forming apparatus of:
detecting (S401) that the mobile device exists in a range of a predetermined distance;
acquiring (S412) by sending a request message to the mobile device to inquire whether a file has been selected on the mobile device via said communication means (2117), information indicating a display content displayed on the mobile device when the detecting step detects that the mobile device exists in the range of the predetermined distance;
determining (S412, S601), in a case where information is acquired indicating that a file held by the mobile device is selected, that a print screen should be displayed on the mobile device;
transmitting (S608), to the mobile device (2200) via said communication means (2117), a print screen display request when it is determined (S416, NO) that the print screen should be displayed on the mobile device, and
the mobile device performing the steps of:
receiving the print screen display request causing the mobile device to display a screen including a print button;
sending a print instruction to the image forming apparatus in response to selection of the print button by the user; and
sending the selected file to be printed to the image forming apparatus.

## Patentansprüche

1. System, umfassend eine Bilderzeugungsvorrichtung (2100), die eine Kommunikationseinrichtung (2117, 2109) zum Kommunizieren mit einem mobilen Device (2200) und ein mobiles Device (2200) aufweist, wobei die Bilderzeugungsvorrichtung umfasst:
eine Detektionseinrichtung zum Detektieren (S401), dass das mobile Device in einem Bereich einer vorbestimmten Entfernung vorhanden ist,
eine Erfassungseinrichtung, die konfiguriert ist, durch Senden einer Anforderungsnachricht an das mobile Device zum Anfragen, ob über die Kommunikationseinrichtung (2109) eine Datei auf dem mobilen Device ausgewählt wurde, Information zu erfassen, die einen auf dem mobilen Device angezeigten Displayinhalt angibt, wenn die Detektionseinrichtung detektiert, dass das mobile Device im Bereich vorbestimmter Entfernung existiert;
eine Bestimmungseinrichtung, die konfiguriert ist, falls die Erfassungseinrichtung Information erfasst, die angibt, dass eine durch das mobile Device gespeicherte Datei ausgewählt ist, zu bestimmen, dass ein Druckbildschirm der Datei auf dem mobilen Device angezeigt werden sollte; und
eine Übertragungseinrichtung, die konfiguriert ist, über die Kommunikationseinrichtung eine Druckbildschirmanzeigeaufforderung an das mobile Device zu übertragen, wenn die Bestimmungseinrichtung bestimmt (S416, NO), dass der Druckbildschirm auf dem mobilen Device angezeigt werden sollte, und
wobei das mobile Device umfasst:
eine Kommunikationseinrichtung, die konfiguriert ist, mit der Bilderzeugungsvorrichtung zu kommunizieren;
wobei das mobile Device konfiguriert ist:
die Druckbildschirmanzeigeaufforderung zu empfangen, wodurch das mobile Device veranlasst wird, einen Bildschirm mit einer Drucktaste anzuzeigen;
als Reaktion auf Auswählen der Drucktaste durch einen Benutzer eine Druckanweisung an die Bilderzeugungsvorrichtung zu senden; und
die ausgewählte zu druckende Datei an die Bilderzeugungsvorrichtung zu senden.

2. System nach Anspruch 1, wobei die Kommunikationseinrichtung der Bilderzeugungsvorrichtung umfasst: eine erste Kommunikationseinrichtung (2117) zum Durchführen von Kommunikation über eine kurze Entfernung, und eine zweite Kommunikationseinrichtung (2109), deren Kommunikationsgeschwindigkeit höher ist als jene der ersten Kommunikationseinrichtung,
wobei die Detektionseinrichtung bestimmt, ob die erste Kommunikationseinrichtung mit dem mobilen Device kommunizieren kann, und dadurch detektiert, dass das mobile Device innerhalb des Bereichs der vorbestimmten kurzen Entfernung existiert.

3. System nach Anspruch 1, wobei die Bilderzeugungsvorrichtung ferner umfasst:
eine Speichereinrichtung (2103) zum Speichern einer Datei; und
eine Dateiauswahleinrichtung (801) zum Auswählen einer in der Speichereinrichtung gespeicherten Datei,
wobei, falls eine in der Speichereinrichtung gespeicherte Datei durch die Dateiauswahleinrichtung ausgewählt wird (S413, YES), die Bestimmungseinrichtung konfiguriert ist, zu bestimmen, dass ein Speicherbildschirm zum Speichern der ausgewählten Datei auf dem mobilen Device angezeigt werden sollte, und die Übertragungseinrichtung (2117) konfiguriert ist, eine Anforderung zum Anzeigen eines Speicherbildschirms an das mobile Device zu übertragen, um den Speicherbildschirm auf dem mobilen Device anzuzeigen.

4. System nach Anspruch 3, wobei, falls die Erfassungseinrichtung die Information, die angibt, dass eine durch das mobile Device gespeicherte Datei ausgewählt ist (S412, NO), nicht erfasst und keine Datei durch die Dateiauswahleinrichtung ausgewählt ist (S413, NO), die Bestimmungseinrichtung bestimmt, dass ein Fehlermeldungsbildschirm auf dem mobilen Device angezeigt werden sollte (S414), und die Übertragungseinrichtung konfiguriert ist, Information zum Anzeigen eines Bildschirms für eine Fehlermeldung zu übertragen.

5. System nach Anspruch 4, wobei die Kommunikationseinrichtung (2117) der Bilderzeugungsvorrichtung eine Drahtloskommunikationseinrichtung enthält und das mobile Device (2200) ein Mobiltelefon enthält.

6. Verfahren des Steuerns eines Systems, das eine Bilderzeugungsvorrichtung (2100) umfasst, die eine Kommunikationseinrichtung (2117) zum Kommunizieren mit einem mobilen Device (2200) und ein mobiles Device aufweist, wobei das Verfahren die folgenden durch die Bilderzeugungsvorrichtung durchgeführten Schritte umfasst:
Detektieren (S401), dass das mobile Device in einem Bereich einer vorbestimmten Entfernung vorhanden ist,
Erfassen (S412) von Information, die einen auf dem mobilen Device angezeigten Displayinhalt angibt, durch Senden einer Anforderungsnachricht an das mobile Device zum Anfragen, ob eine Datei auf dem mobilen Device über die Kommunikationseinrichtung (2117) ausgewählt wurde, wenn im Detektionsschritt detektiert wird, dass das mobile Device im Bereich des vorbestimmten Abstands existiert;
Bestimmen (S412, S601), dass ein Druckbildschirm auf dem mobilen Device angezeigt werden sollte, falls Information erfasst wird, die angibt, dass eine im mobilen Device gespeicherte Datei ausgewählt ist; und
Übertragen (S608) einer Druckbildschirmanzeigeaufforderung an das mobile Device (2200) über die Kommunikationseinrichtung (2117), wenn bestimmt wird (S416, NO), dass der Druckbildschirm auf dem mobilen Device angezeigt werden sollte; und
wobei das mobile Device die folgenden Schritte durchführt:
Empfangen der Druckbildschirmanzeigeaufforderung, wodurch das mobile Device veranlasst wird, einen Bildschirm mit einer Drucktaste anzuzeigen;
Senden einer Druckanweisung an die Bilderzeugungsvorrichtung als Reaktion auf Auswählen der Drucktaste durch den Benutzer; und
Senden der ausgewählten zu druckenden Datei an die Bilderzeugungsvorrichtung.

## Revendications

1. Système comprenant un appareil de formation d'image (2100) comportant un moyen de communication (2117, 2109) destiné à communiquer avec un dispositif mobile (2200), et un dispositif mobile (2200), l'appareil de formation d'image comprenant :
un moyen de détection destiné à détecter (S401) que le dispositif mobile est présent sur une distance de portée prédéterminée,
un moyen d'acquisition configuré pour acquérir, par l'envoi d'un message de demande au dispositif mobile demandant si un fichier a été sélectionné sur le dispositif mobile par le biais du moyen de communication (2109), des informations indiquant un contenu d'affichage affiché sur le dispositif mobile lorsque le moyen de détection détecte que le dispositif mobile est présent sur la distance de portée prédéterminée ;
un moyen de détermination configuré pour déterminer, dans un cas dans lequel ledit moyen d'acquisition acquiert des informations indiquant la sélection d'un fichier maintenu par le dispositif mobile, qu'un écran d'impression du fichier doit être affiché sur le dispositif mobile ; et
un moyen de transmission configuré pour transmettre, au dispositif mobile par le biais dudit moyen de communication, une demande d'affichage d'écran d'impression lorsque ledit moyen de détermination détermine (S416, Non) que l'écran d'impression doit être affiché sur le dispositif mobile, et
le dispositif mobile comprenant :
un moyen de communication configuré pour communiquer avec l'appareil de formation d'image ;
le dispositif mobile étant configuré pour :
recevoir la demande d'affichage d'écran d'impression amenant le dispositif mobile à afficher un écran comprenant un bouton d'impression ;
envoyer une instruction d'impression à l'appareil de formation d'image en réponse à une sélection du bouton d'impression par un utilisateur ; et
envoyer le fichier sélectionné à imprimer à l'appareil de formation d'image.

2. Système selon la revendication 1, dans lequel
ledit moyen de communication de l'appareil de formation d'image comprend un premier moyen de communication (2117) destiné à établir une communication à une courte distance, et un second moyen de communication (2109) à vitesse de communication plus élevée que celle dudit premier moyen de communication,
dans lequel ledit moyen de détection détermine si le premier moyen de communication peut communiquer avec le dispositif mobile et détecte ainsi que le dispositif mobile est présent sur la courte distance de portée prédéterminée.

3. Système selon la revendication 1, dans lequel l'appareil de formation d'image comprend en outre :
un moyen de mémorisation (2103) destiné à mémoriser un fichier ; et
un moyen de sélection de fichier (801) destiné à sélectionner un fichier mémorisé dans le moyen de mémorisation,
dans lequel, dans un cas dans lequel un fichier mémorisé dans le moyen de mémorisation est sélectionné par le moyen de sélection de fichier (S413, Oui), ledit moyen de détermination est configuré pour déterminer qu'un écran de sauvegarde destiné à sauvegarder le fichier sélectionné doit être affiché sur le dispositif mobile, et ledit moyen de transmission (2117) est configuré pour transmettre (S415) une demande d'affichage d'écran de sauvegarde au dispositif mobile à des fins d'affichage de l'écran de sauvegarde sur le dispositif mobile.

4. Système selon la revendication 3, dans lequel, dans un cas dans lequel le moyen d'acquisition n'acquiert pas les informations indiquant qu'un fichier maintenu par le dispositif mobile est sélectionné (S412, Non) et qu'aucun fichier n'est sélectionné par ledit moyen de sélection de fichier (S413, Non), ledit moyen de détermination détermine qu'un écran de notification d'erreur doit être affiché (S414) sur le dispositif mobile, et ledit moyen de transmission est configuré pour transmettre (S414) des informations d'affichage d'un écran d'établissement d'une notification d'erreur.

5. Système selon la revendication 4, dans lequel ledit moyen de communication (2117) de l'appareil de formation d'image comprend un moyen de communication sans fil, et le dispositif mobile (2200) comprend un téléphone mobile.

6. Procédé de commande d'un système comprenant un appareil de formation d'image (2100) comportant un moyen de communication (2117) destiné à communiquer avec un dispositif mobile (2200), et un dispositif mobile, comprenant les étapes exécutées par l'appareil de formation d'image, consistant à :
détecter (S401) que le dispositif mobile est présent sur une distance de portée prédéterminée ;
acquérir (S412), par l'envoi d'un message de demande au dispositif mobile demandant si un fichier a été sélectionné sur le dispositif mobile par le biais dudit moyen de communication (2117), des informations indiquant un contenu d'affichage affiché sur le dispositif mobile lorsque l'étape de détection détecte que le dispositif mobile est présent sur la distance de portée prédéterminée ;
déterminer (S412, S601), dans un cas dans lequel des informations sont acquises, indiquant la sélection d'un fichier maintenu par le dispositif mobile, qu'un écran d'impression doit être affiché sur le dispositif mobile ;
transmettre (S608), au dispositif mobile (2200) par le biais dudit moyen de communication (2117), une demande d'affichage d'écran d'impression lorsqu'il est déterminé (S416, Non) que l'écran d'impression doit être affiché sur le dispositif mobile, et
le dispositif mobile exécutant les étapes consistant à :
recevoir la demande d'affichage d'écran d'impression amenant le dispositif mobile à afficher un écran comprenant un bouton d'impression ;
envoyer une instruction d'impression à l'appareil de formation d'image en réponse à une sélection du bouton d'impression par l'utilisateur ; et
envoyer le fichier sélectionné à imprimer à l'appareil de formation d'image.
